# EUROPÄISCHE PATENTSCHRIFT

(11) **EP 1 864 482 B1**
(45) Veröffentlichungstag und Bekanntmachung des Hinweises auf die Patenterteilung: **04.03.2020**
(21) Anmeldenummer: 06707648.9
(22) Anmeldetag: 28.03.2006
(51) Int. Cl.: H04N 1/60

(54) **VORRICHTUNG UND VERFAHREN ZUR DARSTELLUNG VON KÖRPERFARBEN**
DEVICE AND METHOD FOR THE REPRESENTATION OF BODY COLOURS
DISPOSITIF ET PROCEDE DE REPRESENTATION DE COULEURS D'OBJETS

(30) Priorität: 29.03.2005 DE 102005014152
(43) Veröffentlichungstag der Anmeldung: 12.12.2007
(73) Patentinhaber: Diegel, Marco, 07743 Jena (DE)
(72) Erfinder: DIEGEL, Marco, 07745 Jena (DE); Diegel, Günther Georg, 35392 Giessen (DE)
(74) Vertreter: Kruspig, Volkmar
(86) Internationale Anmeldenummer: PCT/EP2006/002798
(87) Internationale Veröffentlichungsnummer: WO 2006/103042

(56) Entgegenhaltungen:
- WO-A-03/058587
- US-A- 5 594 563
- US-A- 6 157 735
- US-A1- 2004 184 005

## Beschreibung

Die Erfindung betrifft eine Vorrichtung zur Darstellung von Körperfarben, mit der insbesondere Druckergebnisse simuliert werden können, und ein Verfahren, mit dem die Körperfarben an verschiedenen Orten und zu verschiedenen Zeiten identisch darstellbar sind.

Körperfarben sind Farben, die an Körper gebunden sind, zum Beispiel die Druckfarbe auf dem Blatt Papier oder die Textilfarbe an den Stoff. Körperfarben absorbieren aus dem weißen Lichtspektrum Spektralanteile. Der vom Auge des Betrachters wahrgenommene Farbton besteht aus den nicht absorbierten Spektralanteilen, die entweder reflektiert (opaker Körper) oder transmittiert (transparenter Körper) werden. Diese Reflexion und/oder Transmission erfordert zwingend die Beleuchtung des Körpers, ohne die die Farbtöne der Körperfarben nicht wahrnehmbar sind. Der Farbton der Körperfarbe wird von der Lichtfarbe beeinflusst. Eine weiße Körperfarbe, zum Beispiel das weiße Blatt Papier oder ein weißer Stoff, ist nur durch Beleuchtung mit weißem Licht darstellbar. Die Farbmischung mit Körperfarben ist subtraktiv.

Ein Beispiel für ein subtraktives Farbprojektionssystem mit hoher Auflösung ist in der US-amerikanischen Patentschrift US 5,594,563 offenbart. Bei der dort gezeigten Projektionsvorrichtung wird ein reales oder virtuelles Farbbild mittels subtraktiver Farbenmischung über einer Vielzahl aufeinander geschichteter Anzeigefelder hindurch projiziert.

Mischt man Körperfarben miteinander, so subtrahiert jede einzelne Körperfarbe ihren Spektralanteil. Das Spektrum der Mischfarbe ist somit schmalbandiger als die Spektren der einzelnen Körperfarben. Im Extremfall ist das resultierende Spektrum schwarz, das heißt das gesamte weiße Lichtspektrum wird absorbiert. Die Druckindustrie verwendet im Vierfarbdruck die subtraktiven Grundfarben Cyan, Magenta, Gelb und Schwarz (abgekürzt CMYK, wobei C für **C**yan, M für **M**agenta, Y für **Y**ellow (gelb) und B für **B**lack (schwarz) steht). Cyan ist ein blaugrüner Farbton, d.h. das Cyan-Spektrum enthält blaue und grüne Anteile aus dem weißen Licht. Magenta setzt sich aus roten und blauen Spektralanteilen und Gelb aus roten und grünen Spektralanteilen zusammen. Beim übereinander Drucken von Cyan und Magenta absorbiert Cyan das Rot vom Magenta und Magenta absorbiert das Grün vom Cyan. Nicht absorbiert wird jeweils der blaue Anteil. Die resultierende Mischfarbe ist somit Blau. Entsprechend erhält man durch übereinander Drucken von Cyan und Gelb die Mischfarbe Grün und durch übereinander Drucken von Gelb und Magenta die Mischfarbe Rot. Die vierte Grundfarbe Schwarz verwendet man, um nicht die drei Farben Cyan, Magenta und Gelb übereinander drucken zu müssen, um Schwarz zu erhalten und weil die Mischung dieser drei Farben in der Praxis eher ein dunkelbrauner statt ein schwarzer Farbton ist. Der Vierfarbdruck kann nicht alle Farben wieder geben. Im Verpackungsdruck und bei hochwertigen Druckerzeugnissen, wie zum Beispiel edle Kalender und Kunstdrucke, werden deshalb neben den Druckgrundfarben Cyan, Magenta, Gelb und Schwarz zusätzlich so genannte Volltonfarben als weitere Farben gedruckt. Gebräuchlich sind Druckmaschinen mit bis zu zwölf Druckwerken, auf denen diese Erzeugnisse mit bis zu zwölf Druckfarben gedruckt werden. Der Farbton einer Volltonfarbe ist in der Regel nicht aus den anderen verwendeten Druckfarben mischbar. Die zusätzlichen Volltonfarben vergrößern den Farbraum als Summe aller aus den verwendeten Grundfarben mischbaren Farbtöne. Volltonfarben werden oft auch als Sonderfarben oder Schmuckfarben bezeichnet.

Von Körperfarben fundamental verschieden sind die selbstleuchtenden Farben von Bildschirmen, die keine Beleuchtung benötigen, um einen Farbton darzustellen. Selbstleuchtende Farben entstehen zum Beispiel durch Phosphoreszenz in den Farbpigmenten der Kathodenröhren- oder Plasmabildschirme. Alle nach dem Stand der Technik bekannten Bildschirme verwenden die additive Farbmischung, bei der die Farbe Weiß durch Addition der drei additiven Grundfarben **R**ot, **G**rün und **B**lau (abgekürzt RGB) gebildet wird, indem diese übereinander oder in Form von kleinen Subpixeln nebeneinander projiziert werden. In der Summe addiert sich das rote, grüne und blaue Spektrum zum weißen Gesamtspektrum. Die Farbe Schwarz wird bei der additiven Farbmischung durch Ausschalten der Grundfarben dargestellt. In der Praxis hängt es vom Umgebungslicht, dem Reflexionsverhalten und der Schwärzung der Mattscheibe des Bildschirmes ab, ob die Sollfarbe Schwarz als schwarzer oder grau-brauner Farbton wahrgenommen wird. Farbiges Umgebungslicht verändert wie bei der subtraktiven Farbmischung auch bei der additiven Farbmischung den wahrgenommenen Farbton. Aufgrund der Brillianz der selbstleuchtenden Farben ist der Einfluss des Umgebungslichtes aber geringer als bei Körperfarben.
In der Praxis gibt es Mischformen von subtraktiver und additiver Farbmischung. Zum Beispiel werden beim Offsetdruck einzelne Farben in Form von Rasterpunkten auf das Drucksubstrat gedruckt. Übereinander gedruckte Farbpunkte mischen subtraktiv, nebeneinander gedruckte Farbpunkte additiv miteinander. Alle Farbpunkte mischen additiv mit dem Farbton des nicht bedruckten Substrates. Bei LCDs werden die selbstleuchtenden additiven Grundfarben Rot, Grün und Blau erzeugt, indem weißes Licht von der Hintergrundbeleuchtung durch subtraktive Filter fällt.

Die Druckindustrie hat das Problem, dass gleiche Druckfarben gedruckt unterschiedliche Farbtöne ergeben können aufgrund einer Vielzahl von Druckparametern. Die Farbabweichung vom Sollwert kann mitunter so groß sein, dass der Kunde den Druck nicht abnimmt, da die gewünschte Farbwirkung nicht erreicht wurde. Um zu verhindern, dass eine teure Auflage wegen falscher Farben zum Fehldruck wird, simuliert man vorher den Auflagendruck. Diese Simulation wird als Farbproof (Farbprüfung) oder kurz als Proof bezeichnet. Wenn der Proof hinreichend gut ist, wird der Auflagendruck frei gegeben. Ansonsten erfolgen noch Korrekturarbeiten und gegebenenfalls weitere Proofs. Der perfekte Proof ist der Andruck auf der Fortdruckmaschine, auf der auch die Auflage gedruckt wird. Aus Kostengründen erfolgt solch ein Andruck nur in Ausnahmefällen. Die zweitbeste Prooflösung ist der Druck auf einer Andruckmaschine. Dies ist eine spezielle Druckmaschine, die für Einzeldrucke konstruiert ist und in ihren Druckeigenschaften der zu verwendenden Fortdruckmaschine entspricht. Aus Kostengründen wird ein Proof auf einer Andruckmaschine nur für hochwertige Druckerzeugnisse durchgeführt. Sowohl auf der Fort- als auch auf der Andruckmaschine sind sämtliche Druckfarben druckbar, einschließlich aller Volltonfarben. Die zunehmende Digitalisierung in der Druckindustrie führte dazu, dass Digitalproof-Lösungen entwickelt wurden. Bei diesen Lösungen wird die zu druckende Information als digitale (Druck-)Datei zu einem Raster Image Prozessor (RIP) gesendet. Der RIP kann als eigenständiger Computer ausgeführt sein oder als Software auf einem PC laufen. Der RIP bereitet die Daten so auf, dass sie zum Beispiel auf hochwertigen Tintenstrahldruckern oder Plottern ausgedruckt werden können. Der RIP verarbeitet dabei innerhalb eines Colormanagementsystems Profildateien von Eingabe- und Ausgabegeräten. Gebräuchliche Profildateien sind zum Beispiel die vom International Color Consortium (ICC) initierten ICC-Profile, die nach festgelegten Regeln für die beteiligten Geräte erstellt werden. In diesen ICC-Profilen ist hinterlegt wie vorgegebene Sollfarben real dargestellt werden. Mit diesen Profildateien werden die Abweichungen in der Farbdarstellung ausgeglichen, die die in der Prozesskette von der Gestaltung bis zum Druck verwendeten Geräte untereinander haben. Der RIP kompensiert mit Hilfe der Profile alle Farbabweichungen, so dass der Proofausdruck, zum Beispiel auf dem Plotter, das Druckergebnis gut simuliert. Voraussetzung für eine gute Simulation ist zwingend die Verwendung des Profiles der Druckmaschine, auf der am Ende gedruckt wird; die Einhaltung der Parameter mit denen die Profile erstellt wurden (zum Beispiel die Papiersorte) und dass alle beteiligten Geräte so kalibriert sind, wie sie beim Erstellen der Profile kalibriert waren. Bei Vorliegen dieser Voraussetzungen ist gewährleistet, dass der Drucker so drucken kann wie im Proof simuliert wurde. Solche Proofs werden als Kontrakt-Proof bezeichnet, da sie rechtsverbindlich sind. Kontrakt-Proof-fähige Digitalproof-Lösungen gibt es von einer Vielzahl von Anbietern, zum Beispiel Digital-Chromalin von Dupont, Verisproofer von Creo-Scitex, Software-RIPs von EFI (Best Colorproof RIP) und Global Graphics (Harlequin-RIP), zum Ansteuern von Tintenstrahldruckern und Plottern von Epson, HP und Canon. Die meisten Digitalproof-Lösungen arbeiten mit den Farben Cyan, Magenta, Gelb, Schwarz, Hell-Cyan und Hell-Magenta. Die letzten zwei Farben unterscheiden sich von Cyan und Magenta nur durch ihre Sättigung. Sie dienen dazu Pastelltöne exakter wiederzugeben. Technisch gesehen sind dies Vierfarbdrucker. Sie können alle Farben wiederzugeben, die mit einer Vierfarben-Offsetdruckmaschine druckbar sind, da sie aufgrund der verwendeten Tinten einen größeren Farbraum haben als eine Vierfarben-Offsetdruckmaschine. Einen deutlich größeren Farbraum als mit dem Vierfarben-Offsetdruck erreicht man mit dem Pantone-Hexachromeverfahren. Er umfasst auch etliche Volltonfarben der gebräuchlichen Farbsysteme HKS, RAL und Pantone. Bei Hexachrome wird mit den sechs Farben Cyan, Magenta, Gelb, Schwarz, Grün und Orange gedruckt. Einige wenige Digitalproof-Lösungen, zum Beispiel die HiFi-Jet-Plotter von MAN Roland, verwenden das Hexachrome-Verfahren. Alle Hexachrome-Digitalproof-Lösungen können den Farbraum des Hexachrome-Druckes auf einer Offsetdruckmaschine wiedergeben. Sie können aber nicht eine Vielzahl von Volltonfarben wiedergeben.

Die zuvor beschriebenen Digitalproof-Lösungen ermöglichen sogenannte Halbton-Proofs. D.h. sie simulieren ausschließlich die Farbtöne (Halbtöne) nicht aber das Raster und den Rasterpunkt des Offset-Druckes. Hierfür gibt es spezialisierte Lösungen, die zusätzlich zum Halbton den Rasterpunkt simulieren. Exakte Rasterpunkt-Proofs werden auf Druckplatten-Belichtern ausgegeben, auf denen auch die Druckplatten für den späteren Auflagendruck erzeugt werden. Solche Geräte werden zum Beispiel von Creo-Scitex angeboten (Trendsetter Spectrum und Lotem Spectrum). Einfachere Lösungen simulieren den Rasterpunkt des Druckplattenbelichters mit einer Software (zum Beispiel Screenproof von EFI oder DotProof von GMG Color) und drucken entsprechend gerasterte Daten auf hochwertigen Tintenstrahl-Druckern und - Plottern aus (zum Beispiel von Epson, Canon und HP). Die Rasterpunkt-Proofs werden in der Regel mit den Original-Druckdaten des RIPs im 1-bit-Format erzeugt. D.h. für jeden Farbauszug liegt eine 1-Bit-Datei vor, die angibt wo ein Rasterpunkt in dieser Farbe gedruckt wird oder nicht.
Allen Digitalproof-Lösungen gemeinsam ist, dass sie keine Fluoreszenz-, Lack- und Metallicfarben wiedergeben können. An Drucksubstraten können sie auch nur den Einfluss von Papierfarben und Papieroberflächen auf die Farbwirkung berücksichtigen. Die Farbwirkung von anderen Drucksubstraten wie z.B. Stoff, Metall, Glas, Kunststoff oder Holz können nicht oder nur unzureichend simuliert werden.
Alle zuvor beschriebenen Proof-Lösungen verwenden einen Ausdruck. Dieser kostet zumindest die Zeit des Ausdruckes und das Verbrauchsmaterial an Papier und Tinten. Hinzu kommen Kurierkosten und Kurierzeiten für Proofs, die auf hochwertigen Digitalproof-Lösungen bei externen Dienstleistern erstellt werden (müssen). Um Zeit zu sparen wird vielerorts der so genannte Soft-Proof angewendet. Dies ist ein Proof auf einem hochwertigen (kalibrierten) Bildschirm. Vorteil der Soft-Proof-Lösung gegenüber den Ausdruck-basierten Proof-Lösungen ist die Geschwindigkeit. Der Proof ist sofort da. Der Gestalter hat sofort einen ersten Eindruck vom späteren Druckergebnis. Nachteilig ist der RGB-Farbraum der Bildschirme, der Farben umfasst, die nicht mit einer Vierfarben-Offsetdruckmaschine druckbar sind, insbesondere die intensiven Rot- Grün- und Blautöne. Hinzu kommt, dass der RGB-Farbraum einige druckbare Farbtöne einer Vierfarben-Offsetdruckmaschine nicht wiedergeben kann, insbesondere Cyan- und Gelbtöne. Ebenfalls nicht darstellbar sind auf den Bildschirmen nach gegenwärtigem Stand der Technik alle Volltonfarben, Fluoreszenz-, Lack- und Metallicfarben. In der Praxis wird der Softproof nur für unkritische Farbbeurteilungen angewandt. Kritische Farben erfordern bislang immer den Ausdruck, entweder auf einem (Digital-)Proofgerät oder auf einer (Andruck-)Maschine. Der aktuelle Stand der Technik im Bereich Softproof ist der, dass seit 2003 hardware-kalibrierbare LCD-Bildschirme einen größeren Farbraum aufweisen als die meisten hochwertigen Röhrenbildschirme. Zu nennen sind zum Beispiel Geräte der Firma Eizo (CG 21, CG 18 und CG 19), Quato (Intelli Proof 21 und 19) und Barco (Coloris Calibrator). Diese genannten LCD-Bildschirme können nicht die intensiven Cyantöne des Vierfarben-Offsetdruckes wiedergeben. Als erster Bildschirm kann dies der Eizo CG 220, der seit Herbst 2004 angeboten wird. Bildschirme mit größeren Farbräumen sind ab 2005 zu erwarten, wenn eine von Genoa Color Technologies entwickelte Technik zum Einsatz kommt, die vier bis sechs Grundfarben verwendet (WO 01/95544 A2). Neben den drei herkömmlichen Grundfarben Rot- Grün- und Blau wird als als vierte bis sechste Grundfarbe Cyan-, Magenta- und Gelb verwendet. Die darzustellenden Cyan-, Magenta- und Gelbanteile werden aus dem RGB-Eingangssignal ausgerechnet und den entsprechenden Cyan-, Magenta- und Gelb-Farbkanälen zugeordnet. Bildschirme mit dieser Technologie werden auch etliche Volltonfarben aus dem Pantone-, HKS-, oder RAL-Farbsystemen wiedergeben können. Nicht wiedergeben können diese Bildschirme viele andere Volltonfarben, Fluoreszenzfarben, Lackfarben und Metallicfarben. Wie alle anderen Bildschirme nach dem Stand der Technik können sie nur den Einfluss von Papierfarben und eingeschränkt von Papieroberflächen auf die Farbwirkung berücksichtigen. Den Einfluss den andere Drucksubstrate wie z. B. Stoff, Metall, Glas, Kunststoff oder Holz auf die Farbtöne haben können nicht simuliert werden.
Alle oben beschriebenen Bildschirme verwenden den RGB-Farbraum. Druckdateien im CMYK-Farbraum oder in anderen Farbräumen mit weiteren Volltonfarben müssen für den Softproof in den RGB-Farbraum umgerechnet werden. Dies geschieht in der Regel innerhalb eines Farbmanagement-Systems, wie zum Beispiel ColorSync von Apple Computer, das (ICC)-Farbprofile von den beteiligten Geräten verwenden kann. Um die Fehler beim Umrechnen gering zu halten erfolgt diese in der Regel über einen geräteunabhängigen Farbraum wie z.B. CIE-LAB und der Verwendung der Profildateien. Von Genoa Color Technologies wird ein Bildschirm vorgeschlagen bei dem die spektralen Eigenschaften der verwendeten Grundfarben die Spektren der Druckfarben imitieren (WO 02/50763 A1 für Bildschirme mit mehr als drei Grundfarben und WO 03/058587 A2 für RGB-Bildschirme, jeweils mit additiver Farbmischung). Gegenüber den RGB-Bildschirmen und den RGBCMY-Bildschirmen nach WO 01/95544 A2 haben diese Bildschirme den (theoretischen) Vorteil, dass die Farbraum-Umrechnung mit ihren Fehlern entfallen kann. Behauptet wird, dass es ausreicht, wenn die spektralen Eigenschaften der Grundfarben den spektralen Eigenschaften der zu simulierenden Druckfarben entspricht. In der Praxis trifft dies ausschließlich für die Farbtöne der Grundfarben zu. Aufgrund der Brillianz-Erhöhung von additiv gemischten Mischfarben ergibt sich eine Abweichung zu den subtraktiv gemischten Mischfarben im Druck, die zu einer Brillianz-Erniedrigung führen. Als Folge müssen Brillianzkompensationen für die Mischfarben errechnet werden, die auch zu Farbabweichungen führen.
Alle Bildschirme können nicht den Rasterpunkt des Offsetdruckes simulieren, da die Auflösung zu niedrig ist. Bekannt ist eine bislang nicht am Markt angebotene Lösung von Genoa Color Technologies (WO 03/0107745 A1), die Ausschnitte der Druckdatei so zu zoomen, dass der Rasterpunkt der Druckmaschine vergrößert mit dem Raster des Bildschirmes dargestellt werden kann. Nachteil dieser Lösung ist, dass der Rasterpunkt nicht in Originalgröße sondern vielfach vergrößert dargestellt wird, wodurch nur ein Ausschnitt der zu druckenden Datei darstellbar ist. Des weiteren können nicht die Rasterwinkel des Druckes simuliert werden, wodurch manche Druckartefakte nicht am Bildschirm simuliert werden können.
Sämtliche zuvor beschriebenen Softproof-Lösungen mit (kalibrierten) Bildschirmen und kostengünstige Digitalproof-Lösungen (Software-RIP und Tintenstrahldrucker) ermöglichen das so genannte Remote-Proofing, bei dem der Proof nicht mehr in der Druckerei oder im Druckvorstufen-Betrieb erfolgt in dem die Druckplatten belichtet werden, sondern entfernt in der Agentur oder beim Kunden. Zunehmend gibt es Lösungen, zum Beispiel eproof von Cyansoft und Virtual Proof von Kodak Polychrome Graphics, die Datenbankgestützt die Bearbeitung von zentral auf einem Server abgespeicherten Dateien von mehreren Personen gleichzeitig ermöglichen und zugleich beim Einsatz von kalibrierten Bildschirmen Softproofs erlauben. Virtual Proof beinhaltet eine Colormanagement-Software und ein Farbmessgerät, mit dem die verwendeten Bildschirme (zum Beispiel Eizo CG 21) jeden Tag mindestens einmal kalibriert werden, und die dem Server mitteilt, ob der Bildschirm aktuell für Softproof geeignet ist oder nicht. Falls nicht werden Proofrelevante Funktionen gesperrt.
Nachteil aller Remote-Proof-Lösungen ist, dass die dargestellten Farben einer Datei auf verschiedenen Bildschirmen selbst identischer Bauart oder der Ausdruck einer Datei auf verschiedenen Proof-Systemen trotz Kalibrierung der Bildschirme unterschiedlich sind. Die Farbabweichungen zwischen zwei identischen Geräten sind in der Praxis häufig sichtbar. Ursachen für diese Farbabweichungen sind z.B.:
- unterschiedliche Kalibrierungen aufgrund unterschiedlicher Kalibriervorlagen;
- unterschiedliche Messgeräte mit denen kalibriert wird;
- Toleranzen bei identischen Messgeräten mit denen kalibriert wird;
- Abweichungen des Umgebungslichtes;
- Abweichungen in der Farbdarstellung aufgrund unterschiedlich hell eingestellter Bildschirme (zum Teil bedingt durch das Umgebungslicht); bzw. unterschiedlich hell eingestellter Lichtboxen, in denen die Proof-Ausdrucke beurteilt werden;
- Toleranzen der Bildschirme bezüglich der Farbtöne der Grundfarben aufgrund etwas unterschiedlicher Filter, unterschiedlicher Lampenspektren und Alterungserscheinungen.
- Abweichungen in Temperatur und Luftfeuchtigkeit, die zu verändertem Farbauftrag bei den Proofdrucker-Ausdrucken führt;
- Toleranzen der Proofdrucker bezüglich des Ausdruckes aufgrund etwas unterschiedlicher Tinten und Papiere und Alterungserscheinungen.

Die einzelnen Prozess-Stufen im Workflow vom Entwurf des Druckerzeugnisses in einer Agentur über die Erstellung der Druckplatten in der Druckvorstufe und dem Druck in der Druckerei einschließlich des vor dem Druck vom Kunden genehmigten Kontrakt-Proofs werden durch diese Farbabweichungen behindert, da diese berücksichtigt werden müssten. In der Praxis kann dies nicht erfolgen, da die einzelnen Abweichungen von einer Solldarstellung nicht bekannt sind. Man behilft sich damit, dass der vom Kunden genehmigte Kontraktproof als Referenz verwendet wird. Der Kontraktproof ist ein vom Kunde akzeptierter Ausdruck auf einem Proofdrucker oder einer Andruckmaschine, der am Rand in der Regel zusätzliche Farbflächen enthält, die spektralphotometrisch ausgemessen werden. Gebräuchlich ist z.B. der UGRA/FOGRA Medienkeil CMYK V 2.0, der 46 Farbfelder enthält. Anhand der Abweichungen der gedruckten Farben der Farbfelder zu den Sollwerten ist feststellbar, ob der Proof innerhalb der gewünschten Toleranzen liegt oder nicht. Seit der DRUPA 2004 werden Prooflösungen angeboten, z.B. von GMG Color, bei denen die Messergebnisse der spektralphotometrischen Messung der Testflächen auf einem Etikett ausgedruckt und anschließend auf den Proofausdruck aufgeklebt werden. Durch dieses Etikett erhält der Kunde ein Dokument, mit dem überprüft werden kann, ob der spätere Ausdruck die Farben innerhalb der gewünschten Toleranzen reproduziert oder nicht. Alle bislang angebotenen Softproof-Lösungen ermöglichen nicht den Kontraktproof, da keine Bildschirmdarstellung bislang rechtswirksam reproduzierbar ist.

Aufgabe der vorliegenden Erfindung ist die Schaffung einer Vorrichtung in Form eines Bildschirm-Systemes zur Darstellung von Körperfarben, mit der insbesondere die Farben eines auf einer Auflagendruckmaschine erzeugten Druckes vor dem Druck simuliert werden (Farbprüfung) und die Schaffung eines Verfahrens mit dem gleiche Körperfarben auf verschiedenen Bildschirm-Systemen, insbesondere an unterschiedlichen Orten, identisch und zu jedem Zeitpunkt reproduzierbar darstellbar sind.

Vorrichtungsseitig wird diese Aufgabe durch die Lehre des Anspruchs 1 gelöst. Bei dem Verfahren zur Farbprüfung von Körperfarben wird diese Aufgabe durch die Lehre des Anspruchs 17 gelöst.

Die erfindungsgemäße Vorrichtung zur Farbprüfung von Körperfarben ermöglicht die Prüfung der Farbwirkung von Körperfarben, insbesondere von Druckfarben auf einem Papier, durch Darstellung der Farben mit einem neuartigem Bildschirmsystem.
Dieses erfindungsgemäße Bildschirm-System wird nachfolgend kurz Bildschirm genannt, und enthält mindestens eines der folgenden Lösungs-Merkmale:
- es wird mindestens eine weiße Lichtquelle verwendet;
- aus dem weißen Licht werden mit subtraktiven Farbfiltern Grundfarben erzeugt;
- die Grundfarben werden gebildet aus Körperfarben;
- es können je nach Ausgestaltung des Bildschirmes eine bis beliebig viele Grundfarben verwendet werden;
- die Grundfarben können ausgewählt werden;
- die Grundfarben können auf beliebigen Substraten vorliegen;
- mit den Grundfarben werden Mischtöne durch subtraktive Filterung gemischt;
- die Reihenfolge der Grundfarben zur Mischung von Mischtönen kann variiert werden;
- die Farbmischung erfolgt subtraktiv für jeden einzelnen Pixel;
- die Farbtöne der einzelnen Pixel werden auf eine Fläche projiziert.

Erfindungsgemäß ist eine Vorrichtung zur Darstellung von Körperfarben zum Zweck der Simulation von Druckergebnissen mit einem Bildschirm vorgesehen. Diese enthält mindestens eine Lichtquelle und eine Projektionsfläche. Bei dieser Vorrichtung werden die Grundfarben aus weißem Licht durch Filter aus Körperfarben und die Mischfarben durch subtraktive Farbmischung durch reflexive Farbfilter erzeugt.

Die Vorrichtung zeichnet sich dadurch aus, dass die Grundfarben gebildet werden durch Reflexion von weißem Licht an mit Druckfarben bedruckten Drucksubstraten, wobei Mischfarben durch subtraktive Farbmischung aus den Grundfarben des Bildes entstehen oder wobei die Körperfarben aus transmissiven Filtergläsern oder Filterfolien erzeugt werden.

Dabei werden die Mischfarben durch subtraktive Farbmischung aus den Grundfarben gebildet, wobei das Bild von hinten auf eine Glas- oder Kunststofffläche projiziert wird oder wobei das Bild von vorne auf eine Projektionsfläche projiziert wird. Die subtraktive Farbmischung erfolgt für jeden Pixel einzeln oder in Pixelgruppen.

Bei der Projektion des Bildes von hinten auf die Glas- oder Kunststofffläche kann die Glas- oder Kunststofffläche schwarz eingefärbt sein.

Bei der Projektion des Bildes von vorne auf die Projektionsfläche kann die Projektionsfläche weiß sein.

Die Erfindung sieht verschiedene Ausgestaltungen vor, bei der die zu simulierende (Druck-)datei als Bild entweder von hinten oder von vorne auf die Projektionsfläche des Bildschirms projiziert wird. Wird das Bild von hinten projiziert (Rückprojektion), so ist die Projektionsfläche wie beim Stand der Technik vorzugsweise eine schwarz eingefärbte Mattscheibe. Nicht von hinten beleuchtete Pixel erscheinen bei dieser Ausgestaltung schwarz, wodurch die nicht projizierbare Farbe Schwarz darstellbar ist. Die Farbe Weiß wird bei dieser Ausführung dadurch dargestellt, dass das weiße Licht der Lampe(n) ungefiltert auf die Mattscheibe geworfen wird. Ein eventueller Farbstich des zu bedruckenden Papiers wird bei dieser Ausführung dadurch simuliert, dass das weiße Licht entsprechend dem Farbstich eingefärbt wird. Dies kann z.B. durch eigenständige Farbfilter vor den Grundfarbenfiltern geschehen oder über eine entsprechende Ansteuerung der Grundfarben bei allen Pixeln erreicht werden.

Bei der Ausführung als Frontprojektion wird die Farbe Weiß dadurch erzeugt, indem das weiße Licht der Lampe(n) auf eine weiße Fläche projiziert wird. Vorzugsweise ist diese weiße Fläche identisch mit dem zu bedruckenden Papier, um einen eventuellen Farbstich des Papiers nicht simulieren zu müssen. Eine besonders vorteilhafte Ausgestaltung sieht vor, dass der Anwender die Projektionsfläche austauschen kann.

Bei der Frontprojektion verhindert Umgebungslicht die Darstellung der Farbe schwarz. Deshalb ist die erfindungsgemäße Vorrichtung vorzugsweise so ausgestaltet, dass das Umgebungslicht absorbiert wird. Dies kann z.B. mit geeigneten Polarisationsfiltern in λ/4-Anordnung geschehen, bei der nur passend polarisiertes Licht der Lampe(n) von der Projektionsfläche so reflektiert wird, dass es die Polarisationsfilter passiert. Pixel, die nicht von der/den Lampe(n) beleuchtet werden reflektieren somit auch kein Umgebungslicht und erscheinen schwarz.

Die erfindungsgemäße Vorrichtung erzeugt die Grundfarben aus weißen Licht mittels Filter aus Körperfarben. Diese Körperfarben können transmissive Filtergläser oder Filterfolien sein. Diese Filter arbeiten subtraktiv. Nachteil der transmissiven Filter ist, dass mit ihnen das Reflexionsverhalten der Druckfarben auf dem Papier häufig nur unzureichend durch entsprechende Ansteuerung der Grundfarben simulierbar ist. Hierdurch entstehen Abweichungen der Bildschirmfarbe zur später gedruckten Farbe. Besonders vorteilhafte Ausführungen der Erfindung sehen deshalb reflektive Farbfilter vor, die z.B. aus Druckfarben auf weißem Papier hergestellt sind. Bei dieser Ausgestaltung der erfindungsgemäßen Vorrichtung ist das Reflexionsverhalten der Druckfarben inhärenter Bestandteil der Farbfilter und muss nicht simuliert werden.

Mischfarben werden erfindungsgemäß durch Hintereinanderschalten der Grundfarben (Farbfilter) erzeugt. Diese Farbmischung ist subtraktiv wie beim Druckerzeugnis. Die so erzeugte Mischfarbe hat auf der Projektionsfläche weniger Brillianz als die ungemischten Grundfarben - genau wie der aus zwei oder mehr Grundfarben übereinander gedruckte Farbpunkt weniger brilliant ist, als der aus nur einer Grundfarbe gedruckte Farbpunkt. Bei der besonders vorteilhaften Ausgestaltung mit reflexiven Farbfiltern, hergestellt aus Druckarben auf weißem Papier, sind die Mischtöne identisch mit denen des späteren Druckerzeugnisses. Im Gegensatz zur Erfindung mischen alle Bildschirme nach dem Stand der Technik die Farben additiv, wodurch die Mischfarben farbbrillianter sind als die Grundfarben. Die beim Druckerzeugnis auftretende Verminderung der Farbbrillianz muss deshalb durch Rücknahme der Farbintensität der Grundfarben kompensiert werden, was nur unzureichend möglich ist. Dies führt in der Praxis zu Farbabweichungen zwischen Farbton auf dem Bildschirm und Farbton auf dem Druckerzeugnis.

Im Gegensatz zum Stand der Technik kann der Anwender erfindungsgemäß die Grundfarben auswählen. Insbesondere kann er als Grundfarben Volltonfarben auswählen, mit denen später gedruckt werden soll. Hierdurch kann der Anwender alle Farbtöne von Volltonfarben vor dem Ausdruck auf der Fortdruckmaschine durch Darstellung mit der Vorrichtung prüfen. Er kann bei besonders vorteilhaften Ausgestaltungen die Reihenfolge der Farbfilter anpassen, insbesondere kann die Reihenfolge so gewählt werden, wie die Farben hintereinander auf das Drucksubstrat gedruckt werden. Hierdurch werden auch die Mischtöne so dargestellt wie sie später gedruckt werden. Dies ist mit Bildschirmen nach dem Stand der Technik und selbst mit Ausdruck-basierten Digitalproof-Systemen nicht möglich.

Weitere Ausgestaltungen sehen vor, dass die Farbtemperatur der verwendeten Lampe(n) 5000 K - dem Normlicht in der Druckindustrie - oder dass die Farbtemperatur 6500 K ist - dem Normlicht der Bildbearbeitung. Besonders vorteilhafte Ausgestaltungen der Erfindung ermöglichen die Wahl der Farbtemperatur durch den Anwender.

Die Farbtöne von Fluoreszenzfarben können mit Ausführungen der Erfindung geprüft werden, die Lampen verwenden, die UV-Lichtanteile aussenden oder die eine zusätzliche UV-Licht-Lampe verwenden. Mit dem Stand der Technik können Fluoreszenzfarben nur mit Andrucken geprüft werden. Sie sind weder auf Bildschirm-Proof-Systemen noch auf Ausdruck-basierten Digital-Proof-Systemen darstellbar.
Ebenfalls nur mit Andrucken prüfbar sind bisher Metallic- und Lackfarben, die sich von herkömmlichen Farben durch zusätzlichen Glanz unterscheiden. Der Glanzeffekt entsteht durch gerichtete Reflexion an der glatten Oberfläche. Bei gerichteter Beleuchtung kann der Glanz von Lackfarben deshalb nur in einem Winkel beobachtet werden, bei diffuser Beleuchtung unter vielen Winkeln.

Bei Metallicfarben liegen die Metallpartikel häufig nicht alle in einer Ebene, so dass die gerichtete Reflexion an den einzelnen Metallpartikeln gemittelt über viele Metallpartikel einen diffusen Charakter bekommt. Hierdurch wird der Glanz von Metallicfarben selbst bei gerichteter Beleuchtung unter mehreren Winkeln beobachtbar. Besonders vorteilhafte Ausgestaltungen der Erfindung sehen vor, zusätzliches Licht von anderen Winkeln auf die (reflektiven) Farbfilter mit Metallicfarben bzw. Lackfarben zu lenken, wodurch die projizierte Farbe einen Glanzanteil enthält. Bei passenden Winkeln entspricht der Glanzanteil der Glanzerhöhung der gedruckten Farbe auf dem Papier, wodurch auch diese Sonderfarben mit dem erfindungsgemäßen Bildschirm geprüft werden können. Einfachere erfindungsgemäße Ausführungen erhöhen die Beleuchtungsintensität bei Lack- und Metallicfarben so, dass der Glanzzuwachs im reflektierten Licht enthalten ist.

Die erfindungsgemäße Vorrichtung ist besonders für die Anforderungen der Druckindustrie ausgelegt. Für andere Anwendungen, z.B. in der Textilindustrie, im Möbelbau oder im Industriedesign, ist diese ebenfalls besonders geeignet. Insbesondere die Ausführungen mit Frontprojektion, die den Austausch der Projektionsfläche erlauben, ermöglichen durch geeignete Wahl der Projektionsfläche, der (bevorzugt reflektiven) Farbfilter und passender Farbtemperatur die Simulation der Farbwirkung von Textildrucken, von Möbellackierungen oder von Industrieprodukten. Bei diesen Anwendungen werden in der Regel Volltonfarben verwendet, die nicht mit Bildschirmen und Ausdruck-basierten Digital-Proof-Systemen darstellbar sind. Besonderer Vorteil der Erfindung ist, dass hierbei nicht nur der Farbton der Projektionsfläche sondern auch die Reflexionseigenschaften der Projektionsfläche (z.B. aus Holz, Metall, Kunststoff, Stoff, Glas mit glatter, rauher oder strukturierter Oberfläche) inhärenter Bestandteil der Simulation sind, was bisher nicht möglich ist.

Bei diesen Anwendungen gibt es im Gegensatz zur Druckindustrie oft das Problem der Farbmetamerie, d.h. die gleiche Farbe hat abhängig von der Beleuchtung unterschiedliche Farbwirkung. Insbesondere bei Beleuchtung mit Leuchtstoffröhren oder bei Licht mit viel UV-Lichtanteil tritt dieses Problem auf. Besonders vorteilhafte Ausgestaltungen der Erfindung sehen vor, dass zusätzliche Lichtquellen, z.B. mit UV-Lichtanteil, vom Anwender auswählbar sind, um Metamerieeffekte feststellen zu können.

Spezielle, hochauflösende Ausführungen der Vorrichtung sehen auch die Rasterpunktprüfung vor. Besonders vorteilhafte Ausführungen der Erfindung zur Rasterprüfung ermöglichen die Wahl des Rasterwinkels für jede Grundfarbe. Insbesondere lässt sich der Rasterwinkel auf den Winkelwert einstellen mit dem die Druckmaschine die entsprechende Grundfarbe druckt. Eine weitere Ausgestaltung zur Rasterpunktprüfung sieht vor, die Rasterpunktgröße und/oder die Rasterpunktform und/oder die Art des Rasters und/oder die Auflösung des Rasters entsprechend den Eigenschaften der später beim Auflagendruck verwendeten Offsetdruckmaschine auszuwählen. Diese vorteilhaften Ausgestaltungen haben eine Auflösung, die es ermöglicht die Rasterpunkt-Erzeugung im Druckplattenbelichter zu simulieren. Beim Druckplattenbelichter wird ein einzelner Rasterpunkt z.B. innerhalb einer Matrix aus 8 x 8 Pixeln durch Belichtung von einzelnen Pixeln dieser Matrix erzeugt.

Die Farbmischung der beschriebenen Vorrichtung ist subtraktiv, das heißt die Farbfilter liegen hintereinander im Strahlgang. Dies funktioniert mit guten Ergebnissen, wenn für jeden einzelnen Pixel oder eine (kleine) Gruppe von Pixeln die verwendeten Farbfilter (Grundfarben) individuell festlegbar sind, da ansonsten bei mehr als zwei Farbfiltern nur sehr dunkle Farbtöne projizierbar wären. Die subtraktive Farbmischung durch individuelles Hintereinanderschalten der Farbfilter kann gleichzeitig für alle Pixel oder sequentiell für jeweils einen einzelnen Pixel ausgeführt sein. Natürlich ist auch eine Lösung erfindungsgemäß, die mehrere, aber nicht alle Pixel gleichzeitig ansteuert und projiziert. Bei Ausgestaltungen mit sequentieller oder teilsequentieller Projektion wird ausgenutzt, dass bei genügend schnellem Wechsel zwischen verschiedenen Bildinhalten die einzelnen Bildinhalte vom Gehirn nicht mehr getrennt registrierbar sind. Registriert wird ein Mittelwert von vielen Bildinhalten. Vorrichtungen zur Rasterpunktprüfung haben eine viel höhere Auflösung, so dass hier eine Gruppe von Pixeln sequentiell projiziert werden muss. Vorzugsweise werden zur Rasterpunktprüfung die Rasterpunkte aus einer Matrix von Pixeln aufgebaut, die der im Druckplattenbelichter entspricht, z. B. 8 x 8 Pixel.

Die vorteilhafte pixelweise Ansteuerung kann z.B. so ausgestaltet sein, das weißes (Norm-)Licht von einer Lampe auf einen Digital Mirror Device (DMD) gestrahlt wird. Der DMD besteht aus vielen sehr kleinen Spiegeln, die z.B. um 10° oder 12° verkippt werden können. Je nach Ansteuerung eines Pixels (Spiegels) wird das Licht auf ein erstes Farbfilter gelenkt oder ungefiltert weitergeleitet. Hinter dem Farbfilter werden alle Teilstrahlen aller Pixel anschließend zusammen geführt und parallel zum nächsten DMD weitergeleitet, der die Teilstrahlen dann wieder pixelweise so ablenkt, dass sie durch ein zweites Farbfilter gelenkt werden oder ungefiltert bleiben. Für jede Grundfarbe wird dieser Vorgang des hintereinander Schaltens der Farbfilter wiederholt. DMDs schalten z.B. mit 1000 Hz, um über den zeitlichen Anteil einer Spiegelstellung die Helligkeit dieses Pixels zu modulieren. Besonders vorteilhafte erfindungsgemäße Ausführungen sehen vor, dass zusätzlich zu einem DMD pro Grundfarbe ein weiterer DMD verwendet wird, vorzugsweise in einem separaten Helligkeitsmodul und nach der letzten Grundfarbe, der vorzugsweise für alle Pixel die endgültig gemischten Farbtöne in der Helligkeit moduliert. Die Modulation geschieht derart, dass die Teilstrahlen entsprechend dem Helligkeitswert zeitlich angepasst entweder auf eine schwarze Absorberfläche oder in das Projektionsobjektiv gelenkt werden.

Alternative Ausgestaltungen der Erfindung sehen vor, dass anstelle von DMDs Liquid Crystal on Silicon (LCOS) -Chips zur pixelweisen Beeinflussung der Lichtstrahlen verwendet werden. LCOS-Chips modulieren über die Verdrehung der LC-Moleküle die Lichtintensität pixelweise von 0% bis 100% Durchlass. Ausführungen der Erfindung mit LCOS-Chips mischen die Farben pixelweise subtraktiv durch geeignete Führung der Lichtstrahlen.

Es versteht sich, dass neben DMDs und LCOS auch andere Bauelemente (räumliche Lichtmodulatoren) erfindungsgemäß eingesetzt werden können, wenn diese es ermöglichen das Licht der Lampe(n) pixelweise oder in Pixelgruppen auf ein Filter zu lenken oder nicht. Die Ablenkung der Lichtstrahlen kann erfindungsgemäß auch sequentiell sein. Ebenfalls erfindungsgemäß sind Ausführungen, die mehrere Pixel, aber nicht alle Pixel gleichzeitig ansteuern. Ebenso sind Ausführungen vorgesehen, die ausschließlich oder wahlweise mehrere Pixel zu einer Pixelgruppe zusammenfassen und diese Pixelgruppe(n) ansteuern.

Die erfindungsgemäße Vorrichtung verwendet n Grundfarben, wobei n theoretisch beliebig sein kann. In der Praxis wird n Werte von 1 bis 12 einnehmen, d.h. es werden Druckdateien mit einer bis zwölf Druckfarben simuliert, die anschließend als Einfarbendruck oder Mehrfarbendruck mit bis zu zwölf Druckfarben auf entsprechenden Druckmaschinen gedruckt werden. Vorteilhafte Ausführungen sehen vor, dass die Farbfilter für die Grundfarbenerzeugung automatisch aus einem Magazin gewählt werden können. Besonders vorteilhafte Ausführungen sehen vor, dass zusätzlich Farbfilter manuell eingelegt werden können, z.B. ein Stück Stoff oder ein lackiertes Stück Holz.

Vorteilhafte Ausführungen der Erfindung sehen vor, dass das Umgebungslicht gemessen und der Farbton des Umgebungslichtes auf der Projektionsfläche durch entsprechende Ansteuerung der Lampe(n) und/oder der Grundfarben kompensiert wird. Hierdurch wird gewährleistet, dass die eingestellte Farbtemperatur nicht durch farbstichiges Umgebungslicht verfälscht wird. Besonders vorteilhafte Ausführungen der Erfindung sehen vor, nicht kompensierbare Umgebungslicht-Farbstiche zu kennzeichnen und eine Änderung des Umgebungslichtes zu fordern. Die Kennzeichnung kann z.B. durch eine optische Anzeige erfolgen. Alternativ oder zusätzlich kann auch eine Information erfolgen, dass das Umgebungslicht die Farben des projizierten Bildes nicht verfälscht.

Vorteilhafte Ausgestaltungen der Erfindung sehen vor, dass mit einem Messgerät, vorzugsweise einem Spektralphotometer, die Farben der Grundfarben jederzeit gemessen und mit den Sollwerten der Grundfarben verglichen werden können. Korrigierbare Abweichungen, z. B. durch Änderung der Farbtemperatur der Lampe(n), werden dann korrigiert. Bei nicht korrigierbaren Abweichungen, z.B. wenn ein Farbfilter ausgebleicht ist, sehen besonders vorteilhafte Ausgestaltungen der Erfindung vor, die entsprechenden Grundfarben (Farbfilter) als fehlerhaft zu kennzeichnen und den Austausch zu fordern. Die Kennzeichnung kann z.B. durch eine rote Leuchtdiode erfolgen. Alternativ oder zusätzlich kann auch eine Kennzeichnung, z.B. mit einer grünen Leuchtdiode, erfolgen, dass die Grundfarben der Farbfilter den Sollwerten entsprechen und/oder dass die Farben der Farbfilter identisch mit den projizierten Farben sind.
Vorteilhafte Ausführungen der Erfindung kalibrieren sich mit den Messwerten nach den vorgegebenen Sollwerten automatisch und/oder manuell.

Weiterhin ist vorgesehen, dass in den Bildschirm der Vorrichtung eine Lichtbox integriert ist, um das projizierte Bild mit einem Ausdruck visuell oder messtechnisch vergleichen zu können. Vorzugsweise wird der Ausdruck in der Lichtbox mit gleichen Licht beleuchtet, das zur Projektion des Bildes verwendet wird. Ein messtechnischer Vergleich erfolgt vorzugsweise mit dem integrierten Messgerät, insbesondere mit dem Spektralphotometer.

Die Vorrichtung nach der Erfindung kann nicht wie beim Stand der Technik mit einer herkömmlichen Grafikkarte angesteuert werden, die ein RGB-Signal ausgibt. Erfindungsgemäße Ausgestaltungen verwenden eine eigene Signalansteuerung, die wiederum verschieden ausgeführt sein kann. Die Ansteuerschaltungen rechnen das Eingangssignal im ersten Schritt aus dessen Farbraum in einen geräteneutralen Farbraum um, vorzugsweise CIELAB, und wandeln anschließend das Signal in den Farbraum um, der mit den verwendeten Grundfarben bei subtraktiver Farbmischung entsteht - dies ist der Farbraum der Druckmaschine, mit der später gedruckt wird. Helle Farbtöne, die im Offsetdruck durch Mischen mit dem Papierweiß entstehen, werden entweder durch eine Helligkeitsmodulation oder bei den Ausführungen zur Rasterpunktprüfung durch entsprechend große Pixel dargestellt.

Eine spezielle Ansteuerung ermöglicht die Helligkeitsmodulation für jede der eins bis n Grundfarben, die verwendet werden, um eine Druckdatei auf dem Bildschirm zu prüfen. Die Helligkeitsmodulation erfolgt dabei vorzugsweise für jeden Pixel einzeln, kann aber auch in Pixelgruppen erfolgen. Die Auflösung der Helligkeitsmodulation beträgt mindestens 8 Bit, vorzugsweise 10 Bit bis 14 Bit pro Grundfarbe. Ebenfalls erfindungsgemäß ist eine Ansteuerung für einen Bildschirm bei dem die Helligkeitsmodulation für die zu projizierenden Pixel vor oder nach der subtraktiven Farbmischung erfolgt. Vorteilhafte Ausführungen der Erfindung sehen eine Ansteuerung vor, bei der die zu prüfenden Daten farbsepariert verarbeitet werden. D.h. für jede Grundfarbe liegt eine (Teil-) Datei vor, die nur die Informationen enthält welcher Pixel in dieser Farbe mit welcher Helligkeit anzusteuern ist. Die Farbseparation in die einzelnen Farbauszüge erfolgt entweder durch die Ansteuerung selbst oder vorher beim Erstellen der zu prüfenden Daten. Vorzugsweise erfolgt die Farbseparation durch das RIP mit dem später auch der Druckplattenbelichter angesteuert wird. Besonders vorteilhafte Ausgestaltungen der Ansteuerung können auch (vorzugsweise für jeden Pixel) eine Unterfarbenzugabe (UCA - Under Color Addition) und/oder eine Unterfarbenentfernung (UCR - Under Color Removal) und/oder ein Graukomponentenersatz (GCR - Grey Component Replacement) durchführen. Hierbei handelt es sich um Zugabe von Farben (Intensitätserhöhung), insbesondere von Cyan, Magenta und Gelb, in den neutralen und dunklen Bereichen eines Motives (UCA); bzw. der Reduzierung von Farbintensität, insbesondere von Cyan, Magenta und Gelb, in den neutralen Farbbereichen durch den Ersatz mit der Farbe Schwarz (UCR); bzw. den Ersatz von Farbintensität auch in den gesättigten Farbbereichen durch die Farbe Schwarz (GCR).

Besonders vorteilhafte Ausgestaltungen der erfindungsgemäßen Ansteuerung für die Vorrichtung zur Rasterpunktprüfung verwenden die 1-bit-Dateien, mit denen die Druckplatten belichtet werden. Die 8-14 Bit-Helligkeitsmodulation beim Halbton-Proof wird hier ersetzt durch eine örtliche Modulation der (später gedruckten) Rasterpunkte. D.h. ob ein Rasterpunkt angezeigt (später gedruckt) wird oder nicht. Besonders vorteilhafte Ausführungen zur Rasterpunktprüfung haben eine so hohe Auflösung, dass die Punktform des Druckplattenbelichters, mit dem später die Druckplatten erzeugt werden, identisch nachgebildet werden kann. Hierdurch ist es möglich sämtliche Punktformen (elliptisch, rund, rund-quadratisch, lang, quadratisch), Rasterarten (amplitudenmoduliert, frequenzmoduliert, Zufallsraster, Linienraster), Rasterwinkel und Rasterperioden des Druckplattenbelichters am erfindungsgemäßen Bildschirm zu simulieren. Vorzugsweise erfolgt die Punktbildung genauso wie im Druckplattenbelichter, bei dem innerhalb einer Rastermasche aus einer Pixelmatrix von z.B. 16 x 16 Pixeln eine Gruppe von Pixeln zum Rasterpunkt belichtet werden. Besonders vorteilhafte Ausführungen zur Rasterpunktprüfung berücksichtigen auch den Punktzuwachs der Druckmaschine, indem die entsprechenden Druckkennlinien berücksichtigt werden. Besonders vorteilhafte Ausführungen der Erfindung verwenden eine Ansteuerung, die PDF-Dateien, insbesondere im PDF-X/3-Format, und Jobtickets, insbesondere im Job Definition Format (PDF-JDF), verarbeiten kann. Jobtickets sind Weiterverarbeitungsinformationen für die eigentliche Datei.

Neben der Farbprüfung von Druckdateien oder der Simulation der Farbwirkung von anderen bedruckten, lackierten oder eingefärbten Materialien als Papier können vorteilhafte Ausgestaltungen der Erfindung auch (bewegte) RGB-Signale wiedergeben wie herkömmliche Bildschirme nach dem Stand der Technik. Im Gegensatz zu diesem wird das RGB-Signal in der Ansteuerung derart aufbereitet, dass es mit subtraktiver Farbmischung darstellbar ist.

Die erfindungsgemäße Ansteuerung kann vorzugsweise in Hardware und/oder softwareseitig ausgeführt sein. Vorteilhafte Hardware-Ausführungen verwenden frei programmierbare Chips, z.B. frei programmierbare Logikschaltkreise (field programmable gate array - FPGA), oder (schnelle) digitale Signalprozessoren (DSPs) oder Grafikprozessoren mit der Möglichkeit mehr als drei Farbkanäle anzusteuern. Die Grafikprozessoren können auf einer Grafikkarte positioniert sein oder Bestandteil einer CPU (central processing unit - Hauptprozessor) sein. Ebenso können die DSPs oder die FPGAs Bestandteil einer CPU sein. Bei Software-Ausführungen kann die Software ein eigenständiges Programm, oder Bestandteil einer Anwendungs-Software (z.B. ein Layout-Programm) oder einer Betriebssystem-Software sein.

Das erfindungsgemäße Verfahren löst die Aufgabe der identischen Darstellung von Körperfarben, insbesondere von Farben, die mit einer Auflagendruckmaschine gedruckt werden, auf einem Bildschirm-System. Die einfachste Ausführung des erfindungsgemäßen Verfahrens besteht aus einer Vorrichtung zur Darstellung von Körperfarben mit subtraktiver Farbmischung und einer speziellen Ansteuerung für den subtraktiv farbmischenden Bildschirm. Die Ansteuerung setzt ankommende Daten, insbesondere die Daten einer Druckdatei, so um, dass die auf dem subtraktiv farbmischenden Bildschirm dargestellten Farben identisch sind mit den Körperfarben, die später gedruckt werden.

Das erfindungsgemäße Verfahren zeichnet sich dadurch aus, dass die Grundfarben gebildet werden durch Reflexion von weißem Licht an mit Druckfarben bedruckten Drucksubstraten, wobei Mischfarben durch subtraktive Farbmischung aus den Grundfarben des Bildes entstehen oder wobei die Körperfarben aus transmissiven Filtergläsern oder Filterfolien erzeugt werden.

Dabei werden die Mischfarben durch subtraktive Farbmischung aus den Grundfarben gebildet, wobei das Bild von hinten auf eine Glas- oder Kunststofffläche projiziert wird oder wobei das Bild von vorne auf eine Projektionsfläche projiziert wird. Die subtraktive Farbmischung erfolgt für jeden Pixel einzeln oder in Pixelgruppen.

Bei der Projektion des Bildes von hinten auf die Glas- oder Kunststofffläche kann die Glas- oder Kunststofffläche schwarz eingefärbt sein.

Bei der Projektion des Bildes von vorne auf die Projektionsfläche kann die Projektionsfläche weiß sein.
Die Darstellung von Körperfarben mit subtraktiver Farbmischung ist besser als mit allen bekannten Verfahren und Vorrichtungen zur Farbprüfung. Aufgrund von Toleranzen in den Farbfiltern zur Grundfarben-Erzeugung, der Farbe der Projektionsfläche, des Umgebungslichtes, der Farbtemperatur und der verwendeten Messgeräte gibt es kleine Abweichungen, wenn die gleiche (Druck-) Datei auf verschiedenen erfindungsgemäßen Vorrichtungen dargestellt wird. Diese Abweichungen in der Farbdarstellung können dann beseitigt werden, wenn mehrere Bildschirme nebeneinander im Einsatz sind. In diesem Fall dient die Darstellung eines Bildschirmes als Referenz, auf den die anderen Bildschirme mit dem gleichen Messgerät kalibriert werden, so dass die Darstellungen identisch sind. Im digitalen Workflow muss die Druckdatei jederzeit an verschiedenen Orten identisch darstellbar sein. Vorteilhafte Ausführungen des erfindungsgemäßen Verfahrens sehen deshalb vor, dass eine Bildschirm-Darstellung im Workflow zur Referenz erklärt wird und alle anderen Bildschirmdarstellungen diese Referenzdarstellung reproduzieren. Hierzu ist es zwingend erforderlich, dass die Kalibrierung mit dem gleichen Messgerät erfolgt oder dass die verwendeten Messgeräte identisch messen. Da an verschiedenen Orten nicht das identische Messgerät verwendet werden kann und verschiedene Messgeräte beschränkte Messgenauigkeiten haben, sieht das erfindungsgemäße Verfahren vor, die Fehler der Messgeräte zu kompensieren. Hierfür werden die Abweichungen jedes verwendeten Messgerätes zu einem Referenzmessgerät in einer individuellen Profildatei hinterlegt. Die Ansteuerung kompensiert mit Hilfe der Profildatei des bei der Referenzdarstellung verwendeten Messgerätes und der Profildatei des Messgerätes für den anzusteuernden Bildschirm die Messfehler. Aufgrund dieser MessfehlerKompensation können anschließend der Farbton der Projektionsfläche, die Grundfarben-Farbfilter, die Farbtemperatur und das Umgebungslicht gemessen und so eingestellt werden, wie bei der Referenzdarstellung im Workflow. Die Referenz-Darstellung wird hierdurch an einem anderen Ort identisch reproduziert. Dies ist nach dem Stand der Technik nicht möglich.
Die Profildateien der beteiligten Messgeräte werden bei dieser Verfahrens-Ausführung innerhalb des Workflows mit der Druckdatei und den (ICC-) Profilen an die beteiligten Arbeitsplätze gesendet, wo sie in den jeweiligen Ansteuerungen verarbeitet werden.

Eine weitere Ausführungsform des Verfahrens sieht vor, dass die MessfehlerKompensation nicht vor Ort an den Arbeitsplätzen im Workflow durchgeführt wird, sondern an einem zentralen Ort außerhalb des herkömmlichen Workflows. Dieser Ort kann z.B. ein Server des Herstellers des subtraktiv farbmischenden Bildschirmes sein. Wenn die im Workflow Beteiligten die identische Darstellung einer Referenzdarstellung benötigen oder wünschen müssen sie bei dieser erfindungsgemäßen Ausführung die Messfehlerkompensation für jede Darstellung über den zentralen Ort durchführen.

Eine weitere Ausführungsform des Verfahrens sieht vor, an einem zentralen Ort weitere Daten der Darstellung, wie z.B. verwendete Farbfilter für die Grundfarben, Art und Farbton der Projektionsfläche, Farbtemperatur, Umgebungslicht, beteiligtes Messgerät, beteiligter Bildschirm und beteiligte Ansteuerung zu speichern. Mit diesen Daten kann zusätzlich zur Messfehlerkompensation gewährleistet werden, dass eine Referenzdarstellung an einem anderen Ort im Workflow reproduzierbar ist. Ebenso kann damit gewährleistet werden, ob sie reproduziert wurde. Zusammen mit der Druckdatei und einem Medienkeil ermöglichen diese Zusatzdaten einen Kontraktproof. Zum Kontrakt-proof wird die Darstellung auf dem subtraktiv farbmischenden Bildschirm, wenn der Kunde mit der Darstellung der Druckdatei auf einem Bildschirm im Workflow einverstanden ist und dies an dem zentralen Ort dokumentiert. Diese Dokumentation kann z.B. eine digitale Signatur sein. Vorzugsweise werden alle Kontraktproof-relevanten Daten, wie z.B. digitale Signatur des Kunden, Parameter der Bildschirmdarstellung und die Druckdatei in einer Kontraktproof-Datei an dem zentralen Ort gespeichert und vor weiteren schreibenden Zugriff geschützt. Benötigt jemand im Workflow dann den Kontraktproof, z.B. der Drucker um die Druckmaschine korrekt einzurichten, so erhält dieser eine Messfehler-kompensierte Kopie. D.h. auf seinem subtraktiv farbmischenden Bildschirm wird der Kontraktproof reproduziert. Vorteilhafte Verfahren verschlüsseln die Messfehlerkompensation und/oder die Parameter-Daten der Bildschirm-Darstellung und/oder die Druckdatei und/oder die Kontraktproof-Daten, um Fälschungen zu verhindern. Anstelle der mitunter sehr großen Druckdatei kann alternativ auch ein diese repräsentierender Wert, z.B. ein kryptografisch gesicherter Hash-Wert, gespeichert werden.

Bei allen obigen Verfahrensvarianten werden die Druckfarben auf dem erfindungsgemäßen Bildschirm nur dann exakt so dargestellt, wie sie später gedruckt werden, wenn die Farbfilter für die Grundfarben die Druckfarben darstellen können und die Projektionsfläche die Farbe des Drucksubstrates hat. Dies ist am einfachsten gewährleistet, wenn die Farbfilter für die Grundfarben reflektive Filter sind, die aus den mit den Druckfarben bedruckten Drucksubstraten hergestellt sind und wenn die Projektionsfläche das Drucksubstrat ist. Aber auch bei anderen Ausführungen lassen sich mögliche Abweichungen in den Grundfarben zu den gedruckten Farben einfach beseitigen, indem der (Referenz-)bildschirm zuvor kalibriert wird mit gedruckten Farben. Am einfachsten erfolgt im digitalen Workflow dieser exakte Abgleich der Bildschirmdarstellung mit den gedruckten Farben in der beteiligten Druckerei. Vorzugsweise sieht ein farbkritischer Workflow dann wie folgt aus: Die Gestalter arbeiten mit Grundfarben, die bis auf Druckmaschinentypische Parameter identisch sind mit den später gedruckten Farben. Wenn sich die Gestalter für bestimmte Druckfarben (z.B.: CMYK plus Volltonfarben) entschieden haben, erstellt die Druckerei für die gewünschten Druckfarben eine Referenzdarstellung, die mit gedruckten Farben kalibriert wurde. Die Gestalter reproduzieren dann diese Referenzdarstellung und zeigen sie dem Kunden. Falls dieser einverstanden ist wird diese Darstellung zum Kontraktproof, den anschließend alle im Workflow Folgenden reproduzieren. Insbesondere stellt der Drucker anhand des Kontraktproofs seine Druckmaschine ein.

Die Erfindung soll anhand von Ausführungsbeispielen und Figuren näher erläutert werden.

Hierbei zeigen:
Fig. 1 schematisch die Hauptkomponenten der Erfindung mit dem Datenweg bis zum Bild;
Fig. 2a bis Fig. 2d schematisch die subtraktive Farbmischung mit zwei Grundfarben;
Fig. 3a bis Fig. 3d schematisch die Positionen rotierender Farbfilter, um die Farben der Fig. 2a bis Fig. 2d mit einem DMD darzustellen;
Fig. 4a bis Fig. 4d schematisch die Positionen rotierender Prismen, um die Farben der Fig. 2a bis 2d mit je einem LCOS-Chip pro Grundfarbe darzustellen;
Fig. 5 schematisch ein Farbmodul mit einem DMD;
Fig. 6 schematisch eine Ausführung mit einem Spektralphotometer;
Fig. 7 schematisch ein Lampenmodul mit mehreren Lampen;
Fig. 8 schematisch ein Farbmodul für Metallic- und Lackfarben mit einem DMD;
Fig. 9 schematisch die Hauptkomponenten der Erfindung, bei dem die Ansteuerung in einem PC integriert ist mit dem Datenweg bis zum Bild;
Fig. 10 schematisch die wichtigsten Schritte im erfindungsgemäßen Verfahren als Flussdiagramm von der zu druckenden Datei zur Simulation des Druckes im Bild;
Fig. 11a bis Fig. 11e schematisch Verfahrensschritte zum Kontraktproof mit dem erfindungsgemäßen Verfahren als Baumdiagramme.

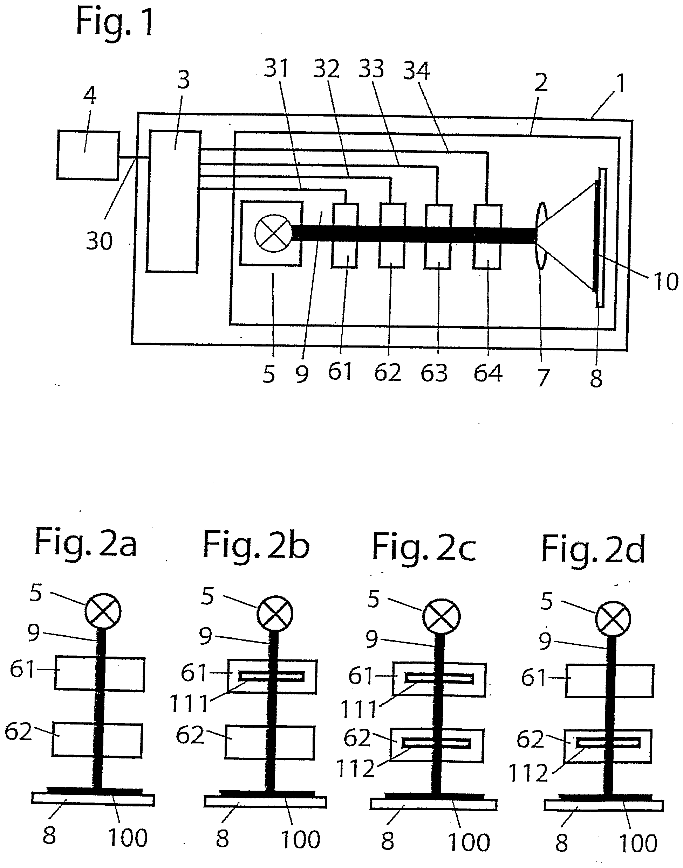

Fig. 1 zeigt schematisch die Hauptkomponenten der Erfindung 1, die im wesentlichen aus dem Bildschirm mit subtraktiver Farbmischung 2 und einer Ansteuerung für die subtraktive Farbmischung 3 besteht. Die Hauptkomponenten des Bildschirmes 2 sind ein Lampenmodul 5, vier Farbmodule 61, 62, 63, 64 für jeweils eine Grundfarbe, ein Projektionsobjektiv 7 und eine Projektionsfläche 8. Die Farbmodule ermöglichen durch ihre Ausgestaltung und Anordnung hintereinander im Bildschirm die subtraktive Farbmischung. Jedes Farbmodul kann das einkommende Licht pixelweise entweder ungefiltert oder gefiltert passieren lassen. Jedes Farbmodul erzeugt aus weißem Licht eine Grundfarbe. Das gefilterte Licht vom ersten Farbmodul 61 wird als erste Grundfarbe im zweiten Farbmodul 62 subtraktiv mit dessen Grundfarbe gemischt, indem es (pixelweise) durch das Filter dieses Farbmodules fällt. Anschließend wird das Licht durch die Farbmodule 63 und 64 gelenkt, wo es wieder jeweils pixelweise gemischt wird Der durch die Farbmodule geleitete Lichtstrahl 9 vom Lampenmodul 5 wird mit dem Projektionsobjektiv 7 auf die Projektionsfläche 8 projiziert, wo das Bild 10 entsteht. Um dieses Bild zu erzeugen verarbeitet die Ansteuerung 3 die einkommenden Daten 30 von der darzustellenden Datei 4 und gibt Steuersignale 31, 32, 33 und 34 an die Farbmodule 61, 62, 63 und 64 weiter. Die Steuersignale steuern die Farbmodule pixelweise so an, dass das Licht 9 von dem Lampenmodul 5 pixelweise durch die Grundfarbenfilter der Farbmodule fällt oder nicht. Die Helligkeitsmodulation erfolgt bei dieser Ausführung über den zeitlichen Anteil, den das Licht pixelweise durch die Grundfarbenfilter gelenkt wird. Das Bild 10 ist die Visualisierung der Datei 4 und bei passender Farbtemperatur und Kalibration des Bildschirmes die exakte Simulation (Farbproof) des späteren Ausdruckes auf einer Druckmaschine. In diesem Beispiel kann der Bildschirm bis zu vier Grundfarben verwenden. Dies können beispielsweise die Farben Cyan, Magenta, Gelb und eine Volltonfarbe sein. Es versteht sich, dass der erfindungsgemäße Bildschirm weniger oder auch mehr Farbmodule aufweisen kann. Vorzugsweise sind die Farbfilter mit den später zu verwendenden Druckfarben bedruckte weiße Papierflächen (nicht gezeigt). Diese Farbflächen filtern und reflektieren das Licht genau so wie später die Farben auf dem bedruckten Papier. Einfachere Ausführungen verwenden anstelle der reflektiven Filter transmissive Filter, vorzugsweise sind diese dichroitisch.

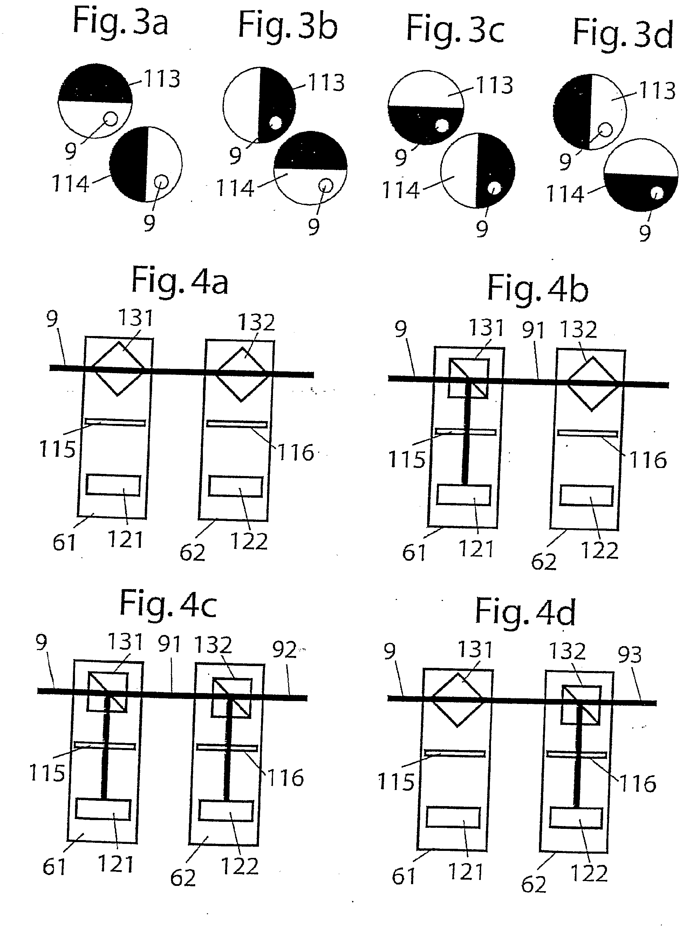

Die Figuren Fig. 2a bis Fig. 2d zeigen schematisch die subtraktive Farbmischung mit zwei Farbmodulen. Gezeigt sind für einen Pixel die vier möglichen subtraktiven Farbfilterungen. Das Licht 9 vom Lampenmodul 5 wird erst durch das Farbmodul 61 und dann durch das Farbmodul 62 gelenkt und fällt am Schluß auf die weiße Projektionsfläche 8, wo der Bildpunkt 10 entsteht. In Fig. 2a wird das Licht 9 jeweils ungefiltert durch die Farbmodule gelenkt, der Bildpunkt 100 auf der Projektionsfläche hat die Farbe weiß. In Fig. 2b wird das Licht im Farbmodul 61 durch das Farbfilter 111 gefiltert. Das Filter 111 erzeugt die erste Grundfarbe. Dieses Licht passiert anschließend ungefiltert mit dem Farbton "erste Grundfarbe" das Farbmodul 62. Der Bildpunkt 100 auf der Projektionsfläche hat die Farbe "erste Grundfarbe".In Fig. 2c wird das Licht 9 in beiden Farbmodulen gefiltert. Im Farbmodul 6 mit dem Farbfilter 111 und mit dem Farbfilter 112 im Farbmodul 62. Der Bildpunkt 100 auf der Projektionsfläche ist die subtraktive Mischfarbe "erste Grundfarbe - zweite Grundfarbe". In Fig. 2d wird das Licht 9 ungefiltert durch das Farbmodul 61 gelenkt und im Farbmodul 62 durch das Farbfilter 112 gefiltert. Der Bildpunkt 100 auf der Projektionsfläche 8 hat die Farbe "zweite Grundfarbe". In der Praxis wird man zusätzlich zu diesen vier maximal gesättigten Farben über den zeitlichen Anteil der Farbfilterung unterschiedlich helle Farbtöne erzeugen.
Die Figuren Fig. 3a bis Fig. 3d zeigen schematisch die Realisierung der subtraktiven Farbmischung nach den Figuren Fig. 2a bis Fig. 2d mit zwei hintereinander geschaltenen Farbfiltern 113 und 114, die als rotierende Farbräder ausgebildet und vor einem Digital Mirror Device (nicht gezeigt) positioniert sind. Die Farbräder sind auf der einen Hälfte eingefärbt mit dem Farbton der ersten Grundfarbe (113) bzw. der zweiten Grundfarbe (114) und in der anderen Hälfte ungefärbt. In Fig. 3a fällt der anfangs weiße Lichtstrahl 9 jeweils durch den ungefärbten Teil der Farbräder. Der ausgehende Lichtstrahl bleibt somit weiß. In Fig. 3b fällt der anfangs weiße Lichtstrahl 9 durch den eingefärbten Teil des Farbfilters 113. Der Farbton nach dem Filter 113 ist die "erste Grundfarbe". Anschließend wird das gefärbte Licht durch den ungefärbten Teil des Farbfilters 114 gelenkt. Der ausgehende Lichtstrahl hat somit am Schluß die Farbe "erste Grundfarbe". In Fig. 3c fällt der Lichtstrahl 9 jeweils durch die eingefärbten Hälften der Farbräder 113 und 114. Der ausgehende Lichtstrahl hat die subtraktive Mischfarbe "erste Grundfarbe - zweite Grundfarbe". In Fig. 3d fällt das Licht des Lichtstrahles 9 durch die ungefärbte Hälfte des Farbfilters 113 und anschließend durch die gefärbte Hälfte des Filters 114. Der ausgehende Lichtstrahl hat somit die Farbe "zweite Grundfarbe". Die subtraktive Farbmischung in den Fig. 3a bis Fig. 3d ist sequentiell. D.h. passend zu den Stellungen der Farbräder wird das nicht gezeigte DMD so angesteuert, dass nur die gewünschten Pixel die jeweilige Farbe zum Projektionsobjektiv weiterleiten. In der Praxis wird man zusätzlich zu diesen vier maximal gesättigten Farben über den zeitlichen Anteil der Farbfilterung unterschiedlich helle Farbtöne erzeugen.
Die Figuren Fig. 4a bis Fig. 4d zeigen schematisch die Realisierung der subtraktiven Farbmischung nach den Figuren Fig. 2a bis Fig. 2d mit zwei Farbmodulen 61 und 62, die jeweils ein rotierendes Prisma 131 bzw. 132 und jeweils einen LCOS-Chip 121 bzw. 122 zur pixelweisen Helligkeitsmodulation und jeweils ein Farbfilter 115 bzw. 116 enthalten. In Fig. 4a stehen die rotierenden Prismen 131 und 132 in den Farbmodulen 61 und 62 so, dass der eingehende weiße Lichtstrahl 9 die Farbmodule jeweils ungefiltert passiert. Die resultierende Farbe ist weiß. In Fig. 4b steht das Prisma 131 im ersten Farbmodul so, dass der einkommende Lichtstrahl 9 auf den LCOS-Chip 121 gelenkt wird. Beim Weg dorthin passiert der Lichtstrahl das Farbfilter 115. Der vom LCOS-Chip reflektierte und pixelweise in der Helligkeit modulierte Lichtstrahl 91 passiert erneut das Farbfilter 115 und wird vom Prisma 131 zum Ausgang des Farbmodules weiter geleitet. Der ausgehende Lichtstrahl 91 hat die Farbe "erste Grundfarbe". Das Prisma 132 im zweiten Farbmodul steht so, dass der Lichtstrahl ungehindert passiert wird. Die resultierende Farbe ist die "erste Grundfarbe". In Fig 4c stehen die Prismen 131, 132 in den beiden Farbmodulen 61, 62 so, dass der Lichtstrahl jeweils durch das Farbfilter 115, 116 gelenkt und im LCOS-Chip 121, 122 jeweils pixelweise die Helligkeit moduliert wird. Das erste Farbmodul 61 wandelt das weiße Licht des eingehenden Lichtstrahles 9 um in einen gefärbten Lichtstrahl 91 mit der Farbe "erste Grundfarbe". Dieses Licht wird im zweiten Farbmodul 62 erneut gefiltert. Der ausgehende Lichtstrahl hat die Farbe "erste Grundfarbe - zweite Grundfarbe". In Fig. 4d stehen die Prismen 131, 132 in den Farbmodulen 61, 62 so, dass der eingehende Lichtstrahl 9 das erste Farbmodul 61 ungefiltert passiert. Im zweiten Farbmodul wird das Licht mit dem Farbfilter 116 gefiltert und mit dem LCOS-Chip 122 pixelweise in seiner Helligkeit moduliert. Der ausgehende Lichtstrahl 93 hat die Farbe "zweite Grundfarbe". Die subtraktive Farbmischung in den Fig. 4a bis Fig. 4d ist sequentiell. D.h. passend zu den Stellungen der rotierenden Prismen werden die LCOS-Chips so angesteuert, dass nur die gewünschten Pixel die jeweilige Farbe zum Projektionsobjektiv weiterleiten.

Es versteht sich, dass auch Ausführungen mit beliebig vielen hinter einander geschalteten Farbmodulen mit Farbrädern bzw. LCOS-Chips erfindungsgemäß sind.

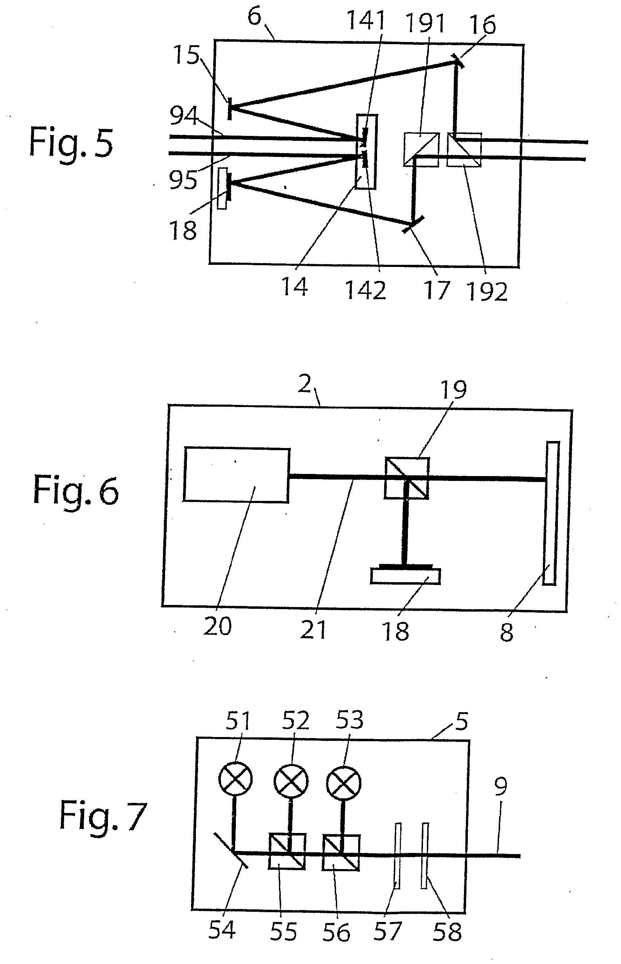

Fig. 5 zeigt schematisch ein Farbmodul 6 mit einem DMD 14. Der eingehende Lichtstrahl 94 wird vom DMD-Pixel-Spiegel 141 so abgelenkt, dass er über die Spiegel 15 und 16 und das Prisma 192 das Farbmodul ungefiltert verlässt. Der eingehende Lichtstrahl 95 wird vom DMD-Pixel-Spiegel 142 so abgelenkt, dass er auf das reflektive Farbfilter 18 fällt. Der reflektierte Lichtstrahl hat die Farbe des Filters (eine Grundfarbe des Bildschirmes) und verlässt über den Spiegel 17 und die Prismen 191 und 192 das Farbmodul 6. Vorzugsweise ist das Filter 18 eine bedruckte Fläche, die aus dem später zu bedruckenden Drucksubstrat (in der Regel ein Papier) und der später zu verwendenden Druckfarbe hergestellt ist. Helle Farbtöne werden über eine zeitliche Modulation des DMDs 14 erzeugt. Ebenfalls erfindungsgemäß sind Ausführungen, bei denen die pixelweise Helligkeitsmodulation nicht in den einzelnen Farbmodulen erfolgt, sondern über ein spezielles Helligkeitsmodul (nicht gezeigt). Dieses Helligkeitsmodul ist vor dem ersten Farbmodul oder hinter dem letzten Farbmodul angeordnet. Dieses Helligkeitsmodul kann z.B. ein Farbmodul mit einem LCOS-Chip sein (wie in Fig. 4a bis Fig. 4d, nur ohne Farbfilter) oder mit einem DMD (wie in Fig. 5, nur anstelle des Farbfilters 18 ist eine schwarze Absorberfläche).

Fig. 6 zeigt schematisch einen Bildschirm 2 mit integriertem Spektralphotometer 20. Das Spektralphotometer misst mit seinem Messstrahl 21 entweder die Farbe des (hier reflektiven) Farbfilters 18 oder die projizierte Farbe auf der Projektionsfläche 8. die Umschaltung erfolgt über ein rotierendes Prisma 19. Der Einfachheit halber wurden in Fig. 6 weitere Komponenten im Strahlgang (z.B. innerhalb der Farbmodule) weg gelassen.
Fig. 7 zeigt schematisch ein Lampenmodul 5 mit drei Lichtquellen. Die Lichtquelle 51 ist die Standard-Lichtquelle, die kein UV-Lichtanteil emittiert. Vorzugsweise emittiert sie Normlicht D50 mit 5000 K Farbtemperatur. Die Lichtquelle 52 ist eine UV-Lichtquelle und die Lichtquelle 53 eine Leuchtstofflampe. Vor dem Ausgang des Lampenmodules befindet sich ein Infrarot-Schutzfilter 57 und ein Farbtemperaturfilter 58, um die Farbtemperatur auf D65 (6500 K) umzustellen. Normalerweise wird der ausgehende Lichtstrahl nur von der Lichtquelle 51 erzeugt, wobei die Farbtemperatur vorzugsweise über die Steuerung der Lichtquelle und/oder das Farbfilter 58 eingestellt werden kann. Das Licht von der Lichtquelle 51wird über den Spiegel 54 zum Ausgang des Lampenmodules gelenkt. Für die Beleuchtung von Fluoreszenzfarben wird zusätzlich die UV-Lichtquelle 52 über das Prisma 55 hinzugeschaltet. Um Metamerieeffekte mit Leuchtstofflampen prüfen zu können, wird das Licht von der Leuchtstofflampe 53 über das Prisma 56 zum Lampenmodul-Ausgang gelenkt. Diese Licht kann alleine oder in Kombination mit den Lichtquellen 51 und/oder 52 emittiert werden. Der Einfachheit halber wurden in Fig.7 weitere Komponenten im Strahlgang (z.B. zur Strahlformung) weggelassen. Ebenfalls erfindungsgemäß sind Ausführungen, bei denen IR- und/oder UV-Schutzfilter und/oder Filter zur Farbtemperatur-Einstellung vor oder in den einzelnen Farbmodulen angeordnet sind.

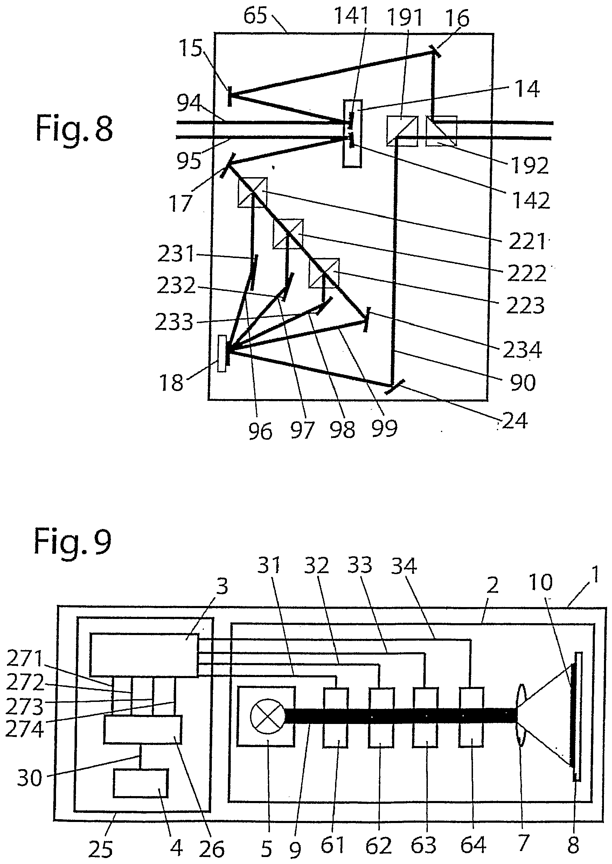

Fig. 8 zeigt ein Farbmodul 65 zur Erzeugung einer glänzenden Grundfarbe, insbesondere einer Lackfarbe oder einer Metallicfarbe, mit einem DMD 14. Der eingehende Lichtstrahl 94 wird vom DMD-Pixel-Spiegel 141 so abgelenkt, dass er über die Spiegel 15 und 16 und das Prisma 192 das Farbmodul ungefiltert verlässt. Der eingehende Lichtstrahl 95 wird vom DMD-Pixel-Spiegel 142 so abgelenkt, dass er über den Spiegel 17 auf drei hintereinander angeordnete Strahlteiler-Prismen 221, 222, 223 fällt. Die resultierenden Teilstrahlen 96, 97, 98 und 99 werden über die Spiegel 231, 232, 233 und 234 auf das reflektive Farbfilter 18 gelenkt. Der reflektierte Lichtstrahl 90 hat die Farbe des Filters (eine Grundfarbe des Bildschirmes) und verlässt über den Spiegel 24 und die Prismen 191 und 192 das Farbmodul 65. Vorzugsweise ist das Filter 18 eine bedruckte Fläche, die aus dem später zu bedruckenden Drucksubstrat (in der Regel ein Papier) und der später zu verwendenden Druckfarbe hergestellt ist.
Diese Farbe ist eine Metallic- oder Lackfarbe. Diese Farben zeigen eine Glanzerhöhung aufgrund der Metallpartikel oder der glatten Lackoberfläche. Durch die in unterschiedlichen Winkeln einfallenden Teilstrahlen wird die Glanzerhöhung dieser Farben auch im ausgehenden Lichtstrahl 90 wiedergegeben. Helle Farbtöne werden über eine zeitliche Modulation des DMDs 14 oder über ein nicht gezeigtes Helligkeitsmodul erzeugt.
Fig. 9 zeigt schematisch die Hauptkomponenten der Erfindung 1, mit einer in einem Computer 25 integrierten Ansteuerung 3 und einem integrierten RIP 26. Der Bildschirm mit subtraktiver Farbmischung 2 hat als Hauptkomponenten ein Lampenmodul 5, vier Farbmodule 61, 62, 63, 64 für jeweils eine Grundfarbe, ein Projektionsobjektiv 7 und eine Projektionsfläche 8. Der durch die Farbmodule geleitete Lichtstrahl 9 vom Lampenmodul 5 wird mit dem Projektionsobjektiv 7 auf die Projektionsfläche 8 projiziert, wo das Bild 10 entsteht. Um dieses Bild zu erzeugen verarbeitet die Ansteuerung 3 die von einem RIP 26 einkommenden farbseparierten Daten 241, 242, 243 und 244 von der darzustellenden Datei 4 und gibt Steuersignale 31, 32, 33 und 34 an die Farbmodule 61, 62, 63 und 64 weiter. Die Steuersignale steuern die Farbmodule pixelweise so an, dass das Licht 9 von dem Lampenmodul 5 pixelweise durch die Grundfarbenfilter der Farbmodule fällt oder nicht. Das Bild 10 ist die Visualisierung der Datei 4 und bei passender Farbtemperatur und Kalibration des Bildschirmes die exakte Simulation (Farbproof) des späteren Ausdruckes auf einer Druckmaschine. Bei Ausführungen zur Halbtonprüfung berechnet entweder die Ansteuerung 3 aus den RIP-Daten 241, 242, 243 und 244 die erforderliche Helligkeitsmodulation für jeden projizierten Pixel oder das RIP liefert diese Information. Die Helligkeitsmodulation erfolgt bei der Ausführung zur Halbtonprüfung über den zeitlichen Anteil, den das Licht pixelweise durch die Grundfarbenfilter gelenkt wird. Bei Ausführungen zur Rastertonprüfung ist keine Helligkeitsmodulation erforderlich, da diese über die Rasterpunktgröße gesteuert wird. Bei diesen Ausführungen verarbeitet die Ansteuerung vorzugsweise die 1-Bit-Daten des RIPs, mit denen später die Druckplatten belichtet werden. In Fig. 9 ist sowohl die Datengenerierung (4), das RIP (26) und die Ansteuerung (3) in einem Computer 25 realisiert. Die Ansteuerung 3 kann dabei als Software oder Hardware ausgeführt sein. Bei einer Hardware-Ausführung kann diese im Hauptprozessor (CPU) oder im Grafikprozessor (GPU) integriert sein oder über einen eigenen Prozessor (z.B. auf einer Einsteckkarte) realisiert sein. Das RIP 26 kann in Software oder in Hardware auf einer Einsteckkarte realisiert sein. Ebenfalls erfindungsgemäß sind Ausführungen, bei denen die Ansteuerung und/oder das RIP im Gehäuse des Bildschirmes 2 oder in (jeweils) einem separaten Gehäuse untergebracht sind. Erfindungsgemäß sind auch Ausführungen, bei denen Projektionseinheit und Projektionsfläche nicht in einem Gehäuse integriert sind. In dem Beispiel von Fig. 9 kann der Bildschirm bis zu vier Grundfarben verwenden. Dies können beispielsweise die Farben Cyan, Magenta, Gelb und eine Volltonfarbe sein, es können aber auch nur Volltonfarben sein. Es versteht sich, dass der erfindungsgemäße Bildschirm weniger oder auch mehr Farbmodule aufweisen kann. Vorzugsweise sind die Farbfilter mit den später zu verwendenden Druckfarben bedruckte weiße Papierflächen (nicht gezeigt). Diese Farbflächen filtern und reflektieren das Licht genau so wie später die Farben auf dem bedruckten Papier.

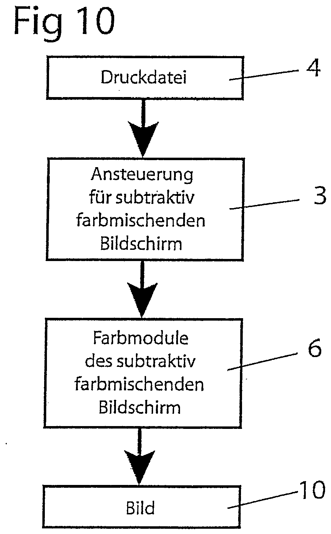

Fig. 1 und Fig. 9 zeigen erfindungsgemäße Vorrichtungen. Zugleich repräsentieren sie eine einfache Ausführung des erfindungsgemäßen Verfahrens. Das erfindungsgemäße Verfahren in seiner einfachsten Ausführung ist die Simulation von Körperfarben, insbesondere von Druckfarben eines Druckes, mit einem Bildschirm, der die Mischfarben durch subtraktive Farbmischung erzeugt. Fig. 10 zeigt schematisch als Flussdiagramm die wichtigsten Schritte des erfindungsgemäßen Verfahrens. Eine (Druck-)Datei 4 wird zu einer Ansteuerung 3 gesendet. Diese Ansteuerung für subtraktiv farbmischende Bildschirme setzt die Druckdatei in Steuersignale für Farbmodule um, und steuert die einzelnen Farbmodule 6 des subtraktiv farbmischenden Bildschirmes so an, dass das Bild 10 entsteht. Das Bild 10 ist bei korrekter Kalibrierung, richtig ausgewählten Grundfarben und Einhaltung von Normwerten eine exakte Simulation der gedruckten Datei auf dem Bildschirm. Nicht eingezeichnet sind Teilschritte, wie z.B. die Verarbeitung von (ICC-)Profildateien, und die Messung der Farben..

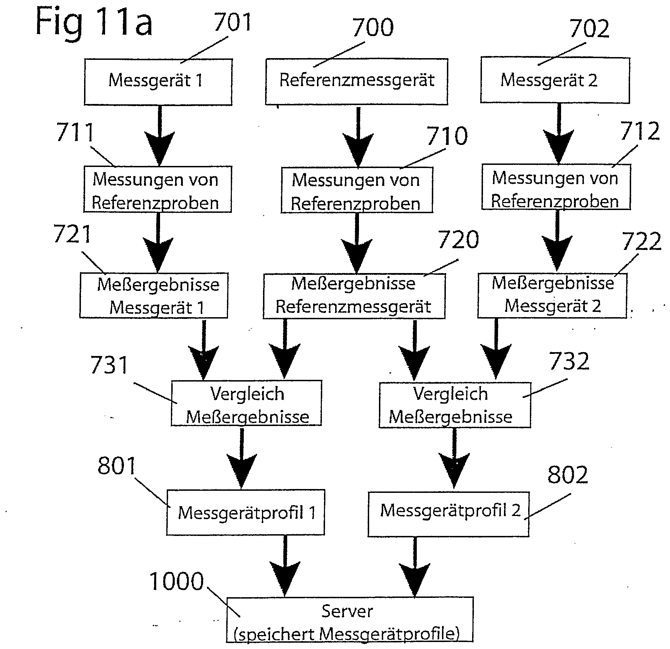

Die Fig. 11a bis Fig. 11e zeigen schematisch als Baumdiagramme wichtige Verfahrensschritte von vorteilhaften Ausführungen des erfindungsgemäßen Verfahrens. Eine vorteilhafte Ausführung ermöglicht die identische Wiedergabe einer Datei auf verschiedenen erfindungsgemäßen Bildschirmen, indem die Toleranzen der beteiligten Messgeräte eliminiert werden. Fig. 11a zeigt, welche Verfahrensschritte die Toleranzen der beteiligten Messgeräte eliminieren. Mit einem hochwertigen Referenzmessgerät 700 (z.B. dem Spektralphotometer GretagMacbeth ColorEye 7000A mit einem maximalen Messfehler von 0.08 ΔE) werden Referenzproben gemessen 710. Die einfacheren Messgeräte 701 und 702 (z.B. dem Spektralphotometer GretagMacbeth EyeOne mit einem maximalen Messfehler von 1.0 ΔE), die in zwei erfindungsgemäße Bildschirm-Systeme integriert sind, messen die gleichen Proben unter gleichen Messbedingungen 711, 712. Man erhält die Messergebnisse 721, 722 und 720. Die Messergebnisse des Referenzmessgerätes 720 werden mit den Messergebnissen 721 und 722 verglichen 731, 732. Die Abweichungen werden in den Messgeräteprofilen 801, 802 dokumentiert, die auf einem Server 1000 gespeichert werden. Die Messgeräteprofile sind die Basis, um die Toleranzen der Messgeräte auszugleichen. Mit dem Messgeräteprofil wird die Abweichung des Messwertes vom exakten Wert korrigiert. D.h. die Messung ist dann genauso exakt wie mit dem Referenzmessgerät.

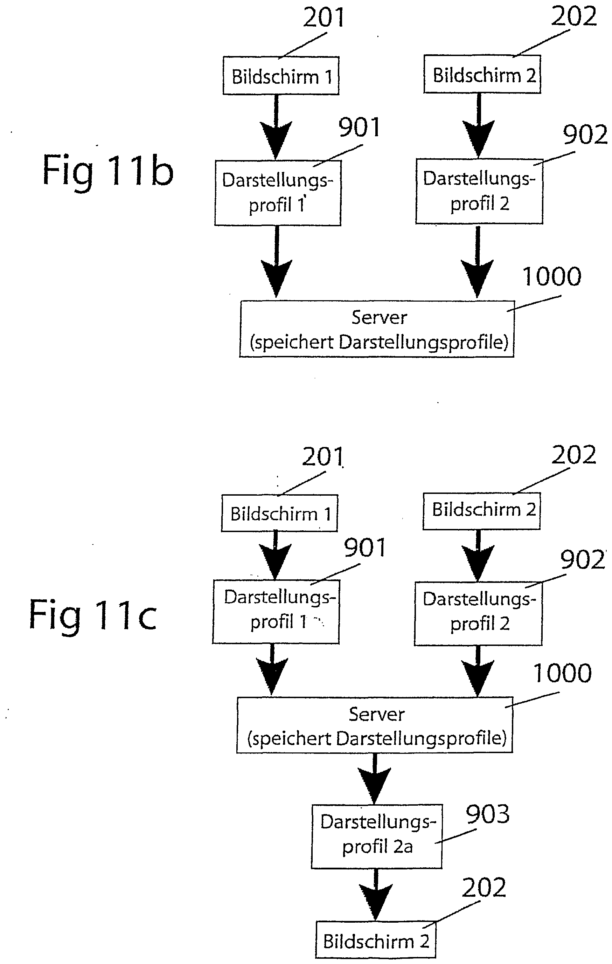

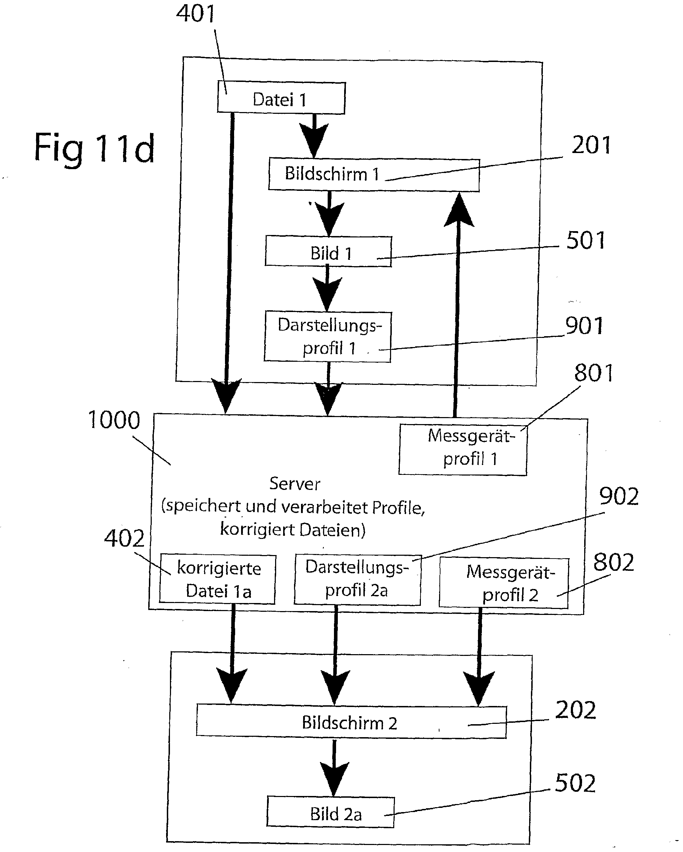

Fig. 11b zeigt schematisch als Baumdiagramm, wie für zwei Bildschirme 201, 202 die Darstellungsparameter in Darstellungsprofilen 901, 902 zusammengefasst und auf einem Server 1000 gespeichert werden. In den Darstellungsprofilen können vorzugsweise alle oder ein Teil der Parameter hinterlegt sein, die für die Darstellung eines Bildes erforderlich sind, z.B.: Art und Intensität der Lichtquelle, welche Farbfilter für die Grundfarben benutzt werden, Art und Farbton der Projektionsfläche, Farbtemperatur, Umgebungslicht, Gammawert, Helligkeit. Für eine exakte Reproduktion eines Bildes auf einem anderen Bildschirm ist es erforderlich, dass die Darstellungsparameter des zweiten Bildschirmes 202 denen des ersten Bildschirmes 201 entsprechen. Diese müssen nicht alle identisch sein. Z.B. wenn das Umgebungslicht unterschiedlich ist, muss dieser Unterschied durch andere Parameter kompensiert werden. Fig. 11c zeigt eine vorteilhafte Ausführung des erfindungsgemäßen Verfahrens, bei der diese Kompensation von einem Server 1000 errechnet und als neues Darstellungsprofil 903 zum zweiten Bildschirm 202 gesendet wird. Mit diesen korrigierten Darstellungsparametern ist das Bild auf dem Bildschirm 202 fast identisch mit dem Bild auf dem Bildschirm 201. Abweichungen sind nur noch bedingt durch die Toleranzen der Messgeräte mit denen die Farben auf den beiden Bildschirmen gemessen werden. Fig. 11d zeigt schematisch Verfahrensschritte einer vorteilhaften Ausführung des erfindungsgemäßen Verfahrens, bei der Darstellungsprofile und Messgerätprofile verwendet werden, um ein Bild exakt auf einem anderen Bildschirm zu reproduzieren. Eine Datei 401 wird auf dem ersten Bildschirm 201als erstes Bild 501 dargestellt. Die Darstellung des Bildes 501 erfolgt mit dem vom Server 1000 bezogenen Messgeräteprofil 801. Sowohl die Datei 401, als auch das Darstellungsprofil 901 werden zum Server gesendet. Dieser errechnet aus den Darstellungsprofilen 901 und 902 ein korrigiertes Darstellungsprofil 903, das zusammen mit dem zugehörenden Messgeräteprofil 802, die Datei 401, bzw. eine korrigierte Datei 402, auf dem zweiten Bildschirm 202 als zweites Bild 502 wiedergibt. Das Bild 502 ist identisch mit dem Bild 501. Die Datei 401 muss in seltenen Fällen korrigiert werden, um auf einem anderen Bildschirm identisch reproduziert zu werden, z.B. wenn eine Farbtemperatureinstellung nicht mit bildschirminternen Filtern möglich ist. Dann erfolgt die Farbtemperatureinstellung über die Datei 402.

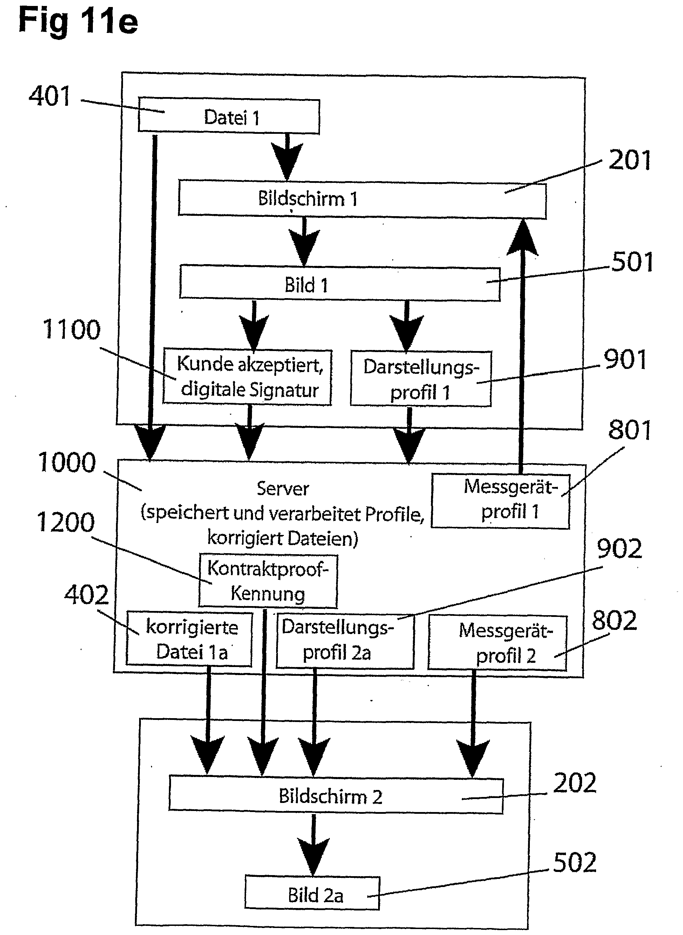

Fig. 11e zeigt die Erweiterung des in Fig. 11d gezeigten erfindungsgemäßen Verfahrens zum Kontraktproof-Verfahren. Die Datei 401 wird mit dem vom Server 1000 bezogenen Messgeräteprofil 801 auf dem ersten Bildschirm 201 als erstes Bild 501 dargestellt. Diese Darstellung ist die Simulation (Proof) des späteren Druckes. Der Kunde sieht das Bild 501 und akzeptiert es als Proof. Er dokumentiert dies z.B. mit seiner digitalen Signatur 1100. Diese Signatur 1100, die Datei 401 und das Darstellungsprofil 901 werden vorzugsweise verschlüsselt zum Server gesendet, wo sie gespeichert werden. Wenn der Proof an anderer Stelle benötigt wird, um ihn auf einem zweiten Bildschirm 202 zu reproduzieren, sendet der Server an diesen Bildschirm 202 das zugehörende Messgeräteprofil 802, das entsprechende Darstellungsprofil 903 und die Datei 401 bzw. eine korrigierte Datei 402, sowie eine Kontraktproof-Kennung 1200. Bei dem Kontraktproof-Verfahren bleiben auf dem Server alle Dateien gespeichert, die für die erste Darstellung des Kontraktproofs auf dem ersten Bildschirm und für alle weiteren Reproduktionen dieser ersten Kontraktproof-Darstellung auf anderen Bildschirmen benötigt wurden. Sie werden erst gelöscht, wenn der Auftraggeber des Druckerzeugnisses die Löschung veranlasst. Bei Streitigkeiten, wenn der Druck nicht so aussieht wie die Kontraktproof-Darstellung auf dem Bildschirm, kann dann anhand der auf dem Server gespeicherten Proof-Darstellungen nachverfolgt werden, wo im Workflow der Fehler passiert ist, und wer den Schaden zu bezahlen hat.

Ebenfalls erfindungsgemäß sind weitere Ausführungen, die beliebige Vorrichtungsmerkmale und/oder Verfahrensschritte aus den einzelnen oben geschilderten Ausführungsbeispielen miteinander kombinieren.

## Patentansprüche

1. Vorrichtung zur Darstellung von Körperfarben zum Zweck der Simulation von Druckergebnissen mit einem Bildschirm, enthaltend mindestens eine Lichtquelle und eine Projektionsfläche, wobei
die Grundfarben aus weißem Licht durch Filter aus Körperfarben und die Mischfarben durch subtraktive Farbmischung durch reflexive Farbfilter erzeugt werden,
**dadurch gekennzeichnet, dass**
die Grundfarben gebildet werden durch Reflexion von weißem Licht an mit Druckfarben bedruckten Drucksubstraten, wobei Mischfarben durch subtraktive Farbmischung aus den Grundfarben des Bildes entstehen oder
wobei die Körperfarben aus transmissiven Filtergläsern oder Filterfolien erzeugt werden,
wobei die Mischfarben durch subtraktive Farbmischung aus den Grundfarben gebildet werden, wobei das Bild von hinten auf eine Glas- oder Kunststofffläche projiziert wird oder
wobei das Bild von vorne auf eine Projektionsfläche projiziert wird,
wobei die subtraktive Farbmischung für jeden Pixel einzeln oder in Pixelgruppen erfolgt.

2. Vorrichtung nach Anspruch 1,
**dadurch gekennzeichnet, dass**
die reflexiven Farbfilter aus einem üblichen, mit der jeweiligen Druckfarbe versehenen Papier bestehen.

3. Vorrichtung nach einem der vorangegangenen Ansprüche,
**dadurch gekennzeichnet, dass**
die Projektionsfläche austauschbar ist.

4. Vorrichtung nach Anspruch 1 oder 3,
**dadurch gekennzeichnet, dass**
die Projektionsfläche aus einem glatten, rauhen oder strukturiertem Papier, Metall, Holz, Kunststoff, Glas oder Textilmaterial besteht.

5. Vorrichtung nach einem der vorangegangenen Ansprüche,
**dadurch gekennzeichnet, dass**
das Umgebungslicht mit vor der Projektionsfläche angebrachten Polarisationsfiltern in λ/4-Anordnung ausgefiltert wird.

6. Vorrichtung nach Anspruch 1,
**dadurch gekennzeichnet, dass**
die subtraktive Farbmischung zeitgleich für alle Pixel oder Pixelgruppen oder zeitgleich hintereinander für alle Pixel oder Pixelgruppen erfolgt.

7. Vorrichtung nach Anspruch 1,
**dadurch gekennzeichnet, dass**
die Form des projizierten Pixels oder der projizierten Pixelgruppe mittels optischer Komponenten, insbesondere mittels variabler Blenden einstellbar ist.

8. Vorrichtung nach Anspruch 7,
**dadurch gekennzeichnet, dass**
die Form des projizierten Pixels dem Rasterpunkt eines Druckplattenbelichters entspricht.

9. Vorrichtung nach einem der Ansprüche 6 bis 8,
**dadurch gekennzeichnet, dass**
der Abstand der projizierten Pixel oder der projizierten Pixelgruppen einstellbar ist.

10. Vorrichtung nach Anspruch 9,
**dadurch gekennzeichnet, dass**
der Abstand des projizierten Pixels der Rasterweite eines Druckplattenbelichters entspricht.

11. Vorrichtung nach einem der Ansprüche 6 bis 10,
**dadurch gekennzeichnet, dass**
für jede Grundfarbe ein anderer Winkel der projizierten Pixel oder der projizierten Pixelgruppen einstellbar ist, wobei die Winkel für die projizierten Pixel oder Pixelgruppen den Rasterwinkeln von Offset-Druckmaschinen entsprechen.

12. Vorrichtung nach einem der vorangegangenen Ansprüche,
**dadurch gekennzeichnet, dass**
die Lichtquellen und deren Intensität auswählbar sind, wobei die Farbtemperatur des Lichts, mit dem die Grundfarben erzeugt werden, einstellbar ist.

13. Vorrichtung nach einem der vorangegangenen Ansprüche,
**dadurch gekennzeichnet, dass**
ein Messgerät, insbesondere ein Spektralphotometer vorgesehen ist, mit dem die Farben der projizierten Pixel und/oder die Farben der Farbfilter zur Grundfarbenerzeugung gemessen werden, wobei die Messdaten des Messgeräts verwendet werden, um automatisch oder manuell den Bildschirm zu kalibrieren und/oder die Farbtemperatur einzustellen und/oder die Farbtöne der Grundfarben konstant zu halten und/oder die Einhaltung vorgegebener Parameter zu bestätigen und/oder vor Abweichungen von vorgegebenen Parametern zu warnen.

14. Vorrichtung nach einem der vorangegangenen Ansprüche,
**dadurch gekennzeichnet, dass**
eine Lichtbox vorgesehen ist, wobei der Ausdruck in der Lichtbox mit dem gleichen Licht beleuchtet wird, mit dem die Grundfarben gebildet werden und/oder dass die Farben des Ausdrucks der Lichtbox mit dem gleichen Messgerät, insbesondere dem gleichen Spektralphotometer vermessen werden, mit dem die Farben der projizierten Bilder und/oder die Farbfilter der Grundfarbenerzeugung bestimmt werden.

15. Vorrichtung nach Anspruch 1,
**dadurch gekennzeichnet, dass**
das Bild von hinten auf eine schwarz eingefärbte Glas- oder Kunststofffläche projiziert wird.

16. Vorrichtung nach Anspruch 1,
**dadurch gekennzeichnet, dass**
das Bild von vorne auf eine weiße Projektionsfläche projiziert wird.

17. Verfahren zur Darstellung von Körperfarben zum Zweck der Simulation von Druckergebnissen mit einem Bildschirm, enthaltend mindestens eine Lichtquelle und eine Projektionsfläche,
wobei die Mischfarben aus den Grundfarben gemischt werden, wobei mindestens ein Teil der Darstellungsparameter des projizierten Bildes in mindestens einem Darstellungsprofil gespeichert wird,
**dadurch gekennzeichnet, dass**
die Grundfarben durch Reflexion von weißem Licht an mit Druckfarben bedruckten Drucksubstraten gebildet werden, wobei Mischfarben durch subtraktive Farbmischung aus den Grundfarben des Bildes entstehen oder wobei die Körperfarben aus transmissiven Filtergläsern oder Filterfolien erzeugt werden, wobei die Mischfarben durch eine subtraktive Farbmischung aus den Grundfarben gebildet werden,
wobei das Bild von hinten auf eine Glas- oder Kunststofffläche projiziert wird oder
wobei das Bild von vorne auf eine Projektionsfläche projiziert wird,
wobei die subtraktive Farbmischung für jeden Pixel einzeln oder in Pixelgruppen erfolgt.

18. Verfahren nach Anspruch 17,
**dadurch gekennzeichnet, dass**
die Darstellungsparameter eines anderen, weiteren Bildschirms aus einem Darstellungsprofil verarbeitet werden, um dessen Darstellung zu reproduzieren.

19. Verfahren nach Anspruch 17 oder 18,
**dadurch gekennzeichnet, dass**
mindestens ein Messgerät, insbesondere eine Spektralphotometer verwendet wird, dessen Messcharakteristik mit einem Referenzgerät ermittelt wurde und das in mindestens einem Messgeräteprofil hinterlegt ist.

20. Verfahren nach Anspruch 19,
**dadurch gekennzeichnet, dass**
die Messungen des am und/oder im Bildschirm verwendeten Messgeräts mit den zu diesem Messgerät gehörenden Messgeräteprofil so verarbeitet werden, dass Messabweichungen zwischen Messgerät und Referenzmessgerät kompensierbar sind.

21. Verfahren nach Anspruch 20,
**dadurch gekennzeichnet, dass**
die Messgeräteprofile von zwei Messgeräten so verarbeitet werden, dass die jeweiligen Messabweichungen zwischen den Messgeräten zum Referenzmessgerät kompensierbar sind.

22. Verfahren nach einem der Ansprüche 17 bis 21,
**dadurch gekennzeichnet, dass**
die Darstellungsparameter eines weiteren Bildschirms, insbesondere dessen Darstellungsprofil, und die Messungen des am und/oder im Bildschirm verwendeten Messgeräts mit dem zu diesem Messgerät gehörenden Messgeräteprofil so verarbeitet werden, dass die Messabweichungen zwischen diesem Messgerät und dem Referenzmessgerät kompensierbar sind und die Darstellung des anderen Bildschirms reproduziert wird.

23. Verfahren nach einem der Ansprüche 17 bis 21,
**dadurch gekennzeichnet, dass**
die Darstellungsparameter eines weiteren Bildschirms, und die Messungen der am und/oder im Bildschirm verwendeten Messgeräte mit den zu diesen Messgeräten gehörenden Messgeräteprofilen so verarbeitet werden, dass die Messabweichungen zwischen diesem Messgerät und dem Referenzmessgerät kompensierbar sind und die Darstellung des anderen Bildschirms reproduziert wird.

24. Verfahren nach einem der Ansprüche 17 bis 23,
**dadurch gekennzeichnet, dass**
eine für gut befundene Darstellung mit einer eindeutigen Kennung, insbesondere mit einer digitalen Signatur versehen wird.

25. Verfahren nach einem der Ansprüche 17 bis 24,
**dadurch gekennzeichnet, dass**
mindestens ein Darstellungsprofil und/oder mindestens ein Messgeräteprofil und/oder mindestens eine eindeutige Kennung, insbesondere eine digitale Signatur, und/oder die Datei auf einen Server gespeichert werden und/oder vom Server für die Reproduzierung einer Darstellung eines Bildschirms auf einem anderen Bildschirm abgerufen werden.

26. Vorrichtung nach Anspruch 17,
**dadurch gekennzeichnet, dass**
das Bild von hinten auf eine schwarz eingefärbte Glas- oder Kunststofffläche projiziert wird.

27. Vorrichtung nach Anspruch 17,
**dadurch gekennzeichnet, dass**
das Bild von vorne auf eine weiße Projektionsfläche projiziert wird.

## Claims

1. A device for representing body colours for the purpose of simulating printing results with a screen, comprising at least one light source and a projection surface, wherein the primary colours are generated from white light through filters from body colours and the mixed colours are generated through subtractive colour mixing through reflective colour filters
**characterised in that**
the primary colours are formed by reflection of white light from printing substrates printed with printing inks, mixed colours being formed by subtractive colour mixing from the primary colours of the image, or whereby the body colours are produced from transmissive filter glasses or filter films,
the mixed colours being formed by subtractive colour mixing from the primary colours, the image being projected from behind onto a glass or plastic surface, or
where the image is projected onto a projection surface from the front, with subtractive colour mixing for each pixel individually or in pixel groups.

2. A device according to claim 1,
**characterised in that**
the reflective colour filters consist of a standard paper with the respective printing ink.

3. A device according to one of the preceding claims,
**characterised in that**
the projection surface is interchangeable.

4. A device according to claim 1 or 3,
**characterised in that**
the projection surface is made of a smooth, rough or structured paper, metal, wood, plastic, glass or textile material

5. A device according to one of the preceding claims,
**characterised in that**
the ambient light is filtered out with polarizing filters in a λ/4 arrangement in front of the projection surface.

6. A device according to claim 1,
**characterised in that**
the subtractive colour mixing is performed simultaneously for all pixels or pixel groups or simultaneously one after the other for all pixels or pixel groups

7. A device according to claim 1,
**characterised in that**
the shape of the projected pixel or group of projected pixels is adjustable by means of optical components, in particular by means of variable apertures

8. A device according to claim 7,
**characterised in that**
the shape of the projected pixel corresponds to the screen dot of a platesetter.

9. A device according to any one of claims 6 to 8,
**characterised in that**
the distance between the projected pixels or groups of projected pixels is adjustable.

10. A device according to claim 9,
**characterised in that**
the distance of the projected pixel corresponds to the screen ruling of an imagesetter.

11. A device according to any one of claims 6 to 10,
**characterised in that**
a different angle of the projected pixels or projected pixel groups can be set for each primary colour, where the angles for the projected pixels or pixel groups correspond to the screen angles of offset printing machines.

12. A device according to one of the preceding claims,
**characterised in that**
the light sources and their intensity can be selected, whereby the colour temperature of the light with which the primary colours are produced can be adjusted.

13. A device according to one of the preceding claims,
**characterised in that**
a measuring device, in particular a spectrophotometer, is provided, with which the colours of the projected pixels and/or the colours of the colour filters for the primary colour generation are measured, the measurement data of the measuring device being used to calibrate the screen automatically or manually and/or to adjust the colour temperature and/or to keep the colour tones of the primary colours constant and/or to confirm compliance with predetermined parameters and/or to warn of deviations from predetermined parameters.

14. A device according to one of the preceding claims,
**characterised in that**
a light box is provided, wherein the printout in the light box is illuminated with the same light with which the primary colours are formed and/or that the colours of the printout in the light box are measured with the same measuring instrument, in particular the same spectrophotometer, with which the colours of the projected images and/or the colour filters of the primary colour generation are determined.

15. A device according to claim 1,
**characterised in that**
the image is projected from behind onto a black tinted glass or plastic surface.

16. A device according to claim 1,
**characterised in that**
the image is projected from the front onto a white projection surface.

17. A method for the representation of body colours for the purpose of simulating printing results with a screen containing at least one light source and a projection surface,
wherein the mixed colours are mixed from the primary colours, wherein at least part of the representation parameters of the projected image are stored in at least one representation profile,
**characterised in that**
the primary colours are formed by reflection of white light from printing substrates printed with inks, mixed colours being formed by subtractive colour mixing from the primary colours of the image
or wherein the body colours are produced from transmissive filter glasses or filter films, wherein the mixed colours are formed by a subtractive colour mixture of the primary colours,
where the image is projected from behind onto a glass or plastic surface, or where the image is projected onto a projection surface from the front, with subtractive colour mixing for each pixel individually or in pixel groups.

18. A method according to claim 17,
**characterised in that**
the representation parameters from a representation profile of another, additional screen is processed to reproduce its representation

19. A method according to claim 17 or 18,
**characterised in that**
at least one measuring instrument, in particular a spectrophotometer, is used whose measuring characteristics have been determined with a reference instrument and which is stored in at least one measuring instrument profile.

20. A Method according to claim 19,
**characterised in that**
the measurements of the measuring instrument used on and/or in the display screen are processed with the measuring instrument profile belonging to this measuring instrument in such a way that measuring deviations between measuring instrument and reference instrument can be compensated.

21. A Method according to claim 20,
**characterised in that**
the measuring instrument profiles of two measuring instruments are processed in such a way that the respective measuring deviations between the measuring instruments and the reference measuring instrument can be compensated.

22. A method according to any one of claims 17 to 21,
**characterised in that**
the representation parameters of another screen, in particular its representation profile, and the measurements of the measuring instrument used on and/or in the screen are processed with the measuring instrument profile belonging to this measuring instrument in such a way that the measuring deviations between this measuring instrument and the reference measuring instrument can be compensated and the representation of the other screen is reproduced.

23. A method according to any one of claims 17 to 21,
**characterised in that**
the representation parameters of another screen, and the measurements of the measurement instruments used on and/or in the screen are processed with the measurement instrument profiles belonging to these measurement instruments in such a way that the measuring deviations between this measurement instruments and the reference instrument can be compensated and the representation of the other screen is reproduced.

24. A method according to any one of claims 17 to 23,
**characterised in that**
a representation that is deemed to be good is provided with a unique identifier, in particular with a digital signature.

25. A method according to any one of claims 17 to 24,
**characterised in that**
at least one representation profile and/or at least one measuring instrument profile and/or at least one unique identifier, in particular a digital signature, and/or the file is stored on a server and/or retrieved from the server for the purpose of reproducing a representation of one screen on another screen.

26. A device according to claim 17,
**characterised in that**
the image is projected from behind onto a black tinted glass or plastic surface.

27. A device according to claim 17,
**characterised in that**
the image is projected from the front onto a white projection surface.

## Revendications

1. Dispositif pour représenter des couleurs de corps dans le but de simuler des résultats d'impression avec un écran, comprenant au moins une source de lumière et une surface de projection, dans lequel les couleurs primaires sont générées à partir de lumière blanche à travers des filtres de couleurs de corps et les couleurs mélangées sont générées par mélange soustractif de couleurs à travers des filtres de couleurs réfléchissants
**caractérisé en ce que**
les couleurs primaires sont formées par réflexion de la lumière blanche sur des supports d'impression imprimés avec des encres d'imprimerie, les couleurs mélangées étant formées par mélange soustractif de couleurs à partir des couleurs primaires de l'image, ou où les couleurs du corps sont produites à partir de verres filtrants ou de films filtrants transmissifs,
les couleurs mélangées étant formées par mélange soustractif des couleurs primaires, l'image étant projetée de l'arrière sur une surface de verre ou de plastique, ou
où l'image est projetée sur une surface de projection par l'avant, avec un mélange soustractif des couleurs pour chaque pixel individuellement ou par groupes de pixels.

2. Un dispositif selon la revendication 1,
**caractérisé en ce que**
les filtres colorés réfléchissants sont constitués d'un papier standard avec l'encre d'impression correspondante.

3. Un dispositif selon l'une des revendications précédentes,
**caractérisé en ce que**
la surface de projection est interchangeable.

4. Un dispositif selon la revendication 1 ou 3,
**caractérisé en ce que**
la surface de projection est constituée d'un papier lisse, rugueux ou structuré, de métal, de bois, de plastique, de verre ou de matière textile

5. Un dispositif selon l'une des revendications précédentes,
**caractérisé en ce que**
la lumière ambiante est filtrée par des filtres polarisants disposés en λ/4 devant la surface de projection.

6. Un dispositif selon la revendication 1,
**caractérisé en ce que**
le mélange soustractif des couleurs est effectué simultanément pour tous les pixels ou groupes de pixels ou simultanément l'un après l'autre pour tous les pixels ou groupes de pixels

7. Un dispositif selon la revendication 1,
**caractérisé en ce que**
la forme du pixel ou du groupe de pixels projetés est réglable au moyen de composants optiques, en particulier au moyen d'ouvertures variables

8. Un dispositif selon la revendication 7,
**caractérisé en ce que**
la forme du pixel projeté correspond au point d'écran d'une imageuse d'assiettes.

9. Un dispositif selon l'une quelconque des revendications 6 à 8,
**caractérisé en ce que**
la distance entre les pixels projetés ou les groupes de pixels projetés est réglable.

10. Un dispositif selon la revendication 9,
**caractérisé en ce que**
la distance du pixel projeté correspond à l'orientation de l'écran d'une imageuse.

11. Un dispositif selon l'une des revendications 6 à 10,
**caractérisé en ce que**
pour chaque couleur primaire, il est possible de régler un angle différent des pixels ou groupes de pixels projetés, les angles des pixels ou groupes de pixels projetés correspondant aux angles de trame des machines d'impression offset.

12. Un dispositif selon l'une des revendications précédentes,
**caractérisé en ce que**
les sources lumineuses et leur intensité peuvent être sélectionnées, la température de couleur de la lumière avec laquelle les couleurs primaires sont produites pouvant être réglée.

13. Un dispositif selon l'une des revendications précédentes,
**caractérisé en ce que**
un dispositif de mesure, en particulier un spectrophotomètre, est prévu, avec lequel les couleurs des pixels projetés et/ou les couleurs des filtres de couleur pour la génération de couleurs primaires sont mesurées, les données de mesure du dispositif de mesure étant utilisées pour calibrer l'écran automatiquement ou manuellement et/ou pour ajuster la température de couleur et/ou pour maintenir les tonalités de couleur des couleurs primaires constantes et/ou pour confirmer la conformité avec des paramètres prédéterminés et/ou pour avertir des écarts par rapport à des paramètres prédéterminés.

14. Un dispositif selon l'une des revendications précédentes,
**caractérisé en ce que**
une boîte à lumière est prévue, dans laquelle l'impression dans la boîte à lumière est éclairée avec la même lumière avec laquelle les couleurs primaires sont formées et/ou que les couleurs de l'impression dans la boîte à lumière sont mesurées avec le même instrument de mesure, en particulier le même spectrophotomètre, avec lequel les couleurs des images projetées et/ou les filtres de couleur de la génération de couleurs primaires sont déterminées.

15. Un dispositif selon la revendication 1,
**caractérisé en ce que**
l'image est projetée par derrière sur une surface en verre ou en plastique teinté noir.

16. Un dispositif selon la revendication 1,
**caractérisé en ce que**
l'image est projetée de face sur une surface de projection blanche.

17. Procédé de représentation de couleurs de corps dans le but de simuler des résultats d'impression avec un écran contenant au moins une source de lumière et une surface de projection,
dans lequel les couleurs mélangées sont mélangées à partir des couleurs primaires, dans lequel au moins une partie des paramètres d'affichage de l'image projetée sont mémorisés dans au moins un profil d'affichage,
**caractérisé en ce que**
les couleurs primaires sont formées par réflexion de la lumière blanche sur des supports d'impression imprimés avec des encres, les couleurs mélangées étant formées par mélange soustractif de couleurs à partir des couleurs primaires de l'image
ou dans lequel les couleurs de corps sont produites à partir de verres filtrants ou de films filtrants transmissifs, les couleurs mélangées étant formées par un mélange soustractif des couleurs primaires,
où l'image est projetée par derrière sur une surface de verre ou de plastique, ou où l'image est projetée sur une surface de projection par l'avant, avec un mélange soustractif des couleurs pour chaque pixel individuellement ou par groupes de pixels.

18. Procédé selon la revendication 17,
**caractérisé en ce que**
les paramètres d'affichage d'un autre écran supplémentaire d'un profil d'affichage sont traités pour reproduire son affichage

19. Procédé selon la revendication 17 ou 18,
**caractérisé en ce que**
on utilise au moins un instrument de mesure, en particulier un spectrophotomètre, dont les caractéristiques de mesure ont été déterminées avec un instrument de référence et qui est mémorisé dans au moins un profil d'instrument de mesure.

20. Procédé selon la revendication 19,
**caractérisé en ce que**
les mesures de l'instrument de mesure utilisé sur et/ou dans l'écran d'affichage sont traitées avec le profil d'instrument de mesure appartenant à cet instrument de mesure de telle sorte que les écarts de mesure entre l'instrument de mesure et l'instrument de référence puissent être compensés.

21. Procédé selon la revendication 20,
**caractérisé en ce que**
les profils de deux instruments de mesure sont traités de manière à ce que les écarts de mesure respectifs entre les instruments de mesure et l'instrument de mesure de référence puissent être compensés.

22. Procédé selon l'une quelconque des revendications 17 à 21,
**caractérisé en ce que**
les paramètres d'affichage d'un autre écran, en particulier son profil d'affichage, et les mesures de l'instrument de mesure utilisé sur et/ou dans l'écran sont traités avec le profil d'instrument de mesure appartenant à cet instrument de mesure de telle sorte que les écarts de mesure entre cet instrument de mesure et l'instrument de mesure de référence puissent être compensées et que l'affichage de l'autre écran soit reproduit.

23. Procédé selon l'une quelconque des revendications 17 à 21,
**caractérisée en ce que**
les paramètres d'affichage d'un autre écran, et les mesures des instruments de mesure utilisés sur et/ou dans l'écran sont traitées avec les profils d'instruments de mesure appartenant à ces instruments de mesure de telle sorte que les écarts de mesure entre ces instruments de mesure et l'instrument de référence puissent être compensées et que l'affichage de l'autre écran soit reproduit.

24. Procédé selon l'une des revendications 17 à 23,
**caractérisé en ce que**
une représentation réputée bonne est munie d'un identifiant unique, notamment d'une signature numérique.

25. Procédé selon l'une quelconque des revendications 17 à 24,
**caractérisé en ce que**
au moins un profil d'affichage et/ou au moins un profil d'instrument de mesure et/ou au moins un identificateur unique, en particulier une signature numérique, et/ou le fichier est stocké sur un serveur et/ou extrait du serveur dans le but de reproduire l'affichage d'un écran sur un autre écran.

26. Un dispositif selon la revendication 17,
**caractérisé en ce que**
l'image est projetée par derrière sur une surface en verre ou en plastique teinté noir.

27. Un dispositif selon la revendication 17,
**caractérisé en ce que**
l'image est projetée de face sur une surface de projection blanche.
